(19) Europäisches Patentamt / European Patent Office / Office européen des brevets

(11) **EP 4 414 106 A1**

(12) **EUROPEAN PATENT APPLICATION**

(43) Date of publication:
**14.08.2024 Bulletin 2024/33**

(21) Application number: **23156366.9**

(22) Date of filing: **13.02.2023**

(51) International Patent Classification (IPC):
$B22F\ 10/28^{(2021.01)}$    $B22F\ 10/366^{(2021.01)}$
$B22F\ 10/38^{(2021.01)}$    $B33Y\ 70/00^{(2020.01)}$
$C22C\ 1/04^{(2023.01)}$    $C22C\ 19/00^{(2006.01)}$
$C22C\ 33/02^{(2006.01)}$    $C22C\ 38/12^{(2006.01)}$
$B33Y\ 10/00^{(2015.01)}$    $B33Y\ 80/00^{(2015.01)}$

(52) Cooperative Patent Classification (CPC):
(C-Sets available)
**B33Y 70/00; B22F 10/28; B22F 10/366;**
**B22F 10/38; B33Y 10/00; B33Y 80/00;**
**C22C 1/0433; C22C 19/00; C22C 19/07;**
**C22C 33/0257; C22C 38/22; C22C 38/24;**
B22F 10/64; B22F 2999/00; B33Y 40/20    (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **VBN Components AB**
**753 23 Uppsala (SE)**

(72) Inventors:
• **BESTE, Ulrik**
**743 71 BJÖRKLINGE (SE)**
• **ARUMSKOG, Pär**
**752 20 UPPSALA (SE)**

(74) Representative: **Brann AB**
**P.O. Box 3690**
**Sveavägen 63**
**103 59 Stockholm (SE)**

(54) **3D PRINTED METAL WITH CONTROLLED CARBIDE SIZE AND METHOD OF PRODUCING THE SAME**

(57) The present invention relates to a 3D-printed product made of at least one alloy wherein the alloy is based on iron, cobalt or nickel and wherein the 3D-printed product comprises a portion made of the alloy and wherein the portion comprises a first sub-portion and a second sub-portion, wherein the first sub-portion and the second sub-portion share a common border, wherein each of the first and second sub-portions comprises a metal matrix and grains of carbides embedded in the metal matrix wherein the first sub-portion comprises grains of carbides having an average carbide cross-sectional area which differs by a factor of at least 2 from an average carbide cross-sectional area of the grains of carbides of the second sub-portion.

a)

FIG. 1

**(Cont. next page)**

(52) Cooperative Patent Classification (CPC): (Cont.)

C-Sets
B22F 2999/00, B22F 10/64, B22F 2003/248,
B22F 2207/13;
B22F 2999/00, B22F 2207/13, B22F 10/38,
B22F 10/366

**Description**

The present patent disclosure relates to a 3D-printed product of iron, cobalt or nickel-based alloys. Particular embodiments relate to 3D-printed products having adjacent portions having different carbide sizes. The present patent disclosure also relates to methods of additive manufacturing a product made of at least one metallic alloy, wherein the method facilitates carbide size control.

Today, additive manufacturing (AM, 3D-printing or free forming) is a common way of preparing various products from metallic alloys. In many AM technologies, the metal alloy powder is directly consolidated in the AM processing machine. Many different AM technologies exist but for metals the most common technology is metal powder bed fusion. In this technology a metal powder is spread out and melted, by a laser or an electron beam, layer by layer, in a pattern based on a CAD drawing of the final product sliced into layers. The benefits are fine microstructure, complex shapes and high material yield.

In general, many metallic tools or parts have a ductile core and a hard outer shell, where the core serves to limit the brittle fractures while the shell provides for an increased durability, such as wear resistance. One way to achieve this core/shell configuration is by coating or cladding techniques adapted to the alloys of the core and the shell which commonly are different alloys. A problem with said techniques and structure is the occurrence of sharp interfaces between the ductile core and the hard shell. These interfaces are often initiation points for fractures leading to failure of the tool or part. Further, the difference in coefficient of thermal expansion (CTE) due to the core and the shell having different compositions may lead to internal stress and delamination. Additionally, the traditional techniques of coating and cladding are not always suitable for tools or parts having complex geometry.

Another way to achieve the core/shell configuration is to perform surface hardening by, for example, carbon, boron or nitrogen, where the details are exposed to specific gasses for diffusion during heat treatment, to achieve a different material composition in the surface than in the bulk, leading to other mechanical properties at the surface, such as higher hardness. The heat treatment surface hardening methods have limitations in their process complexity (especially for complex shapes), needs for high temperatures, and control of treated depth. In addition, all extra process steps such as cladding, coatings, surface hardening, additional surface treatments add extra costs and extra lead time.

The present invention aims at overcoming the drawbacks of prior art and to present a 3D printed product having parts with different carbide sizes or areas but where the different parts have the same average alloy composition and are obtained from the same powder alloy. In contrast, with conventional AM the only way of obtaining a product having differing properties in different parts of the product is by using alloys of different composition in the AM process or by post-treatment of the product obtained by AM for example by applying a coating or by heating.

Beneficially, the present invention provides AM produced products with predetermined varying properties in different parts of the product but where the product may be obtained from a single powder alloy. Further, the present invention reduces the internal stress that may be created between portions having different carbide sizes or obtained from different powder alloys in tools or parts and thereby avoids fracture initiation and at the same time the present invention is suitable for tools or parts having complex geometries.

A method is also presented where the carbide size may be varied so that desired or wanted properties may be obtained at different portions or layers of the product. The present method further facilitates the possibility of selecting a desired or wanted carbide structure in a specific portion or layer in a product and thereby tailoring the properties of said specific portion.

In other words, the present invention facilitates the production of products with different properties in different adjacent or bordering parts of the product. A transition layer may be arranged or obtained between the different parts, providing an interface that reduces the internal stress. Furthermore, the present method allows for a more efficient process with the same or improved mechanical properties of the manufactured product. This is possible by adjusting beam power or beam current, scan speed, hatching distance and beam focus in the process. As will be described further herein below the present invention allows for a more optimized production of 3D-printed products since the method facilitates that some layers or portions of the product may be treated at a higher scan speed which, for example, results in faster and more cost-efficient production.

According to a first aspect of the present patent disclosure, there is provided a 3D-printed product made of at least one alloy wherein the alloy is based on iron, cobalt or nickel and wherein the 3D-printed product comprises a portion made of the alloy and wherein the portion comprises a first sub-portion and a second sub-portion, wherein the first sub-portion and the second sub-portion share a common border, wherein each of the first and second sub-portions comprises a metal matrix and grains of carbides embedded in the metal matrix; wherein the first sub-portion comprises grains of carbides having an average carbide cross-sectional area which differs by a factor of at least 2 from an average carbide cross-sectional area of the grains of carbides of the second sub-portion.

The 3D-printed, or additively manufactured, product, comprises a part, here being either the first or the second sub-portion, having grains of carbides being twice as large as in the adjacent other sub-portion, while both the sub-portions are made of the same (average) alloy composition. The sub-portions beneficially may have varying mechanical properties, such as ductility, elasticity, hardness, durability (such as wear resistance), toughness, shear strength, tensile strength, etc, depending on, for instance, the used alloy and carbide size difference between the sub-portions. Furthermore, beneficially, that the 3D-printed product can be made with a single alloy powder being used in the 3D-printer, without the need for post-processing such as hot isostatic pressing (HIP). The latter post-processing is not excluded, however, as it may further improve the product properties.

The product comprises varying (average) carbide sizes at least in two sub-portions, which variation in carbide size is made (or "built-in") in the product during manufacturing thereof by heating/melting the alloy at the sub-portions with varying applied energies, which may be described by volumetric energy densities. The first sub-portion may, for instance, have been heated with an energy resulting in a first volumetric energy density to have been applied, and the second sub-portion may, for instance, be heated with an energy resulting in a second volumetric energy density to have been applied, the first and the second volumetric energy densities differing by at least a factor 2, as further described with respect to the methods below.

The average carbide cross-sectional areas may be determined by cutting a manufactured product, so that a cross-section thereof may be observed. The cut surfaces may optionally be polished or etched. The number of grains of carbide can then be counted and their (average) cross-sectional areas as seen along the cut can be measured. This can be done using scanning electron microscopy (SEM). The carbides can be seen with SEM due to their different local composition compared to the composition of the surrounding matrix, which provides contrast in the resulting SEM images. The magnification to be used depend on the carbide size; examples are described herein below. Once a portion is found wherein the carbide grain size (as may be seen from the carbide cross-sectional areas) has large variations, the two adjacent sub-portions may be defined/chosen, and the average carbide cross-sectional areas can be determined for each of the two sub-portions.

The first sub-portion and the second sub-portion instead of, or in addition to, sharing a common border may more generally be arranged adjacent to each other.

In an embodiment, the grains of carbides in the first sub-portion have an average carbide cross-sectional area which differs by a factor of at least 2.5, preferably at least 3, more preferably at least 3.5 times, even more preferably at least 4 times, most preferably at least 4.5 from the average carbide cross-sectional area of the grains of carbides in the second sub-portion. Beneficially, these larger differences in the size of the grains of carbide in the two sub-portions, result in even larger differences in the mechanical properties of the respective sub-portions.

In an embodiment, the average carbide cross-sectional area of the first sub-portion is larger than the average carbide cross-sectional area of the second sub-portion.

In an embodiment, a total carbide cross-sectional area in percentage of a total cross-section of the first sub-portion and the second sub-portion are the same $\pm 10\%$.

In an embodiment, the portion has a cross-sectional area of at least $0.5\ mm^2$, and preferably smaller than $5\ cm^2$.

In an embodiment, a first standard deviation associated with the average carbide cross-sectional area of the first sub-portion differs by at least a factor of 4 from a second standard deviation associated with the average carbide cross-sectional area of the second sub-portion, preferably at least a factor of 5, more preferably at least a factor of 6, most preferably at least a factor of 7.

In an embodiment, the first standard deviation is larger than the second standard deviation.

In an embodiment the common border has a width in a range of 1-200 $\mu$m.

The common border may be referred to as a transition zone or layer in case it has a width. Respective parts in the respective first and second sub-portions adjacent to the common border may be referred to as first and second layers, respectively. These layers may, but generally do not, coincide with the powder layers used in the additive manufacturing apparatus. Instead, these layers indicate the boundary region between the two sub-portions and may be in any direction relative to the product and additive manufacturing apparatus, depending on where the product has the different carbide sizes.

In an embodiment, the common border may have a continuous transition in average carbide cross-sectional area going from the first sub-portion to the second sub-portion.

Alternatively, the common border or transition zone or layer may have an associated larger average carbide cross-sectional area than each of the first and the second sub-portion.

In embodiment, the common border or transition zone or layer may have an associated standard deviation of the average carbide cross-sectional area that is larger by at least a factor 2 than a first standard deviation of the average carbide cross-section area in the first sub-portion, a second standard deviation of the average carbide cross-section area in the second sub-portion, or both.

In an embodiment, a maximum carbide cross-sectional area of the first sub-portion is at least 2 times larger than a maximum carbide cross-sectional area of the second sub-portion, preferably at least 3 times larger, more preferably at least 4 times larger, even more preferably at least 5 times larger, most preferably 6 times larger.

In an embodiment, the 3D-printed product is obtained from a single powder alloy.

In a preferred embodiment the alloy is an iron-based alloy or a cobalt-based alloy.

In an embodiment, the alloy is an iron-based alloy comprising carbon and at least two or more of chromium, tungsten, molybdenum, cobalt and vanadium, and unavoidable trace amount of impurities, or wherein the alloy is iron based and comprises chromium, vanadium, molybdenum and optionally tungsten and/or cobalt, and unavoidable trace amount of impurities.

In an embodiment, the alloy is based on iron and comprises carbon: equal to or greater than 1.0 and equal to or less than 5.0 weight%; wherein the alloy further comprises at least two, preferably at least three, of chromium, tungsten, vanadium, molybdenum and cobalt in a content of: chromium: equal to or greater than 3 and equal to or less than 25weight%, tungsten: equal to or greater than 2 and equal to or less than 15 weight%, molybdenum: equal to or greater than 1 and equal to or less than 10 weight%, vanadium: equal to or greater than 3 and equal to or less than 10 weight%, cobalt: equal to or greater than 8 and equal to or less than 20 weight%; and unavoidable trace amount of impurities.

In an embodiment, the alloy comprises carbon: equal to or greater than 3.1 and equal to or less than 5.1 weight%, tungsten: equal to or greater than 18 and equal to or less than 30 weight%, chromium: equal to or greater than 15 and equal to or less than 24 weight%; and cobalt: balance.

In a preferred embodiment, the sum of the chromium and tungsten is 36 to 48wt%.

In an embodiment, the 3D-printed product is a tool or a tool part, wherein said tool is a milling cutter, a shaper cutter, a power skiving cutter, a drill, a milling tool, an extrusion head, a wire drawing die, a hot rolling roll, a gliding bearing, roll bearing ring or auger.

In accordance with a second aspect, there is provided a method of additively manufacturing a product made of at least one alloy in a free forming apparatus having a chamber, wherein the alloy is based on iron, cobalt, or nickel; and wherein the method comprises:

> a. arranging a layer of a powder of the alloy in the chamber;
> b. melting the powder by exposing the powder to an energy beam in accordance with a digital representation of the product and how the product is to be produced;
> c. letting the melted powder solidify; and
> d. repeating the steps a, b, and c in accordance with the digital representation such that at least a part of the product is manufactured,

wherein the digital representation of the product comprises at least a portion of the product, the portion comprising a first and a second sub-portion, wherein the first and the second sub-portion share a common border, wherein the representation of how the product is to be produced comprises instructions for the free forming apparatus to apply, to the portion, an energy beam with one or more corresponding heating parameters, wherein the energy beam is to be applied with a first set of the heating parameters to the first sub-portion and with a second set of the heating parameters to the second sub-portion, wherein the first set of the heating parameters result in the application of a first volumetric energy density to the first sub-portion and a second volumetric energy density to the second sub-portion, wherein the first volumetric energy density differs by at least a factor 2 from the second volumetric energy density.

With the above method, beneficially, a product as described above with respect to the first aspect and further described below is obtained, wherein in the two sub-portions the average carbide sizes vary by a large factor, such as at least a factor of 2. This is obtained even though the two sub-portions are neighboring and can be in the portion which may have an area of as small as 0.5 mm$^2$ and not larger than 5 cm$^2$.

In an embodiment, the first volumetric energy density is larger than the second volumetric energy density. In other words, the first volumetric energy density is at least a factor of 2 larger than the second volumetric energy density. This results in the product having larger carbides in the first sub-portion than in the second sub-portion.

In an embodiment, the energy beam is an electron beam or a laser beam.

In an embodiment, when the energy beam is an electron beam, the free forming apparatus may be an electron beam melting apparatus, or an electron beam powder bed fusion apparatus.

In an embodiment, the heating parameters comprise at least one of: a beam power, a line energy, a scan speed, a hatching distance and a beam focus.

In a preferred embodiment, the one or more heating parameters being varied is the line energy or the scan speed.

In an embodiment, the line energy or scan speed of the second sub-portion differs by at least a factor of three from respectively the line energy or scan speed of the first sub-portion.

In an embodiment, the beam power is between 200 and 3000 W, preferably between 300 and 1800 W.

In an embodiment, the hatching distance is between 0.05 and 1 mm, preferably between 0.1 and 0.3 mm.

In an embodiment, the beam focus is between 0.1 and 1 mm, preferably between 0.3 and 0.7 mm.

In an embodiment, the line energy of the first sub-portion is at least 3.0 J/mm, preferably at least 5.0 J/mm, more preferably at least 7.0 J/mm, but preferably less than 15 J/mm, preferably less than 12 J/mm, preferably less than 10 J/mm.

In an embodiment, the line energy of the second sub-portion is less than 2.0 J/mm, preferably less than 1.6 J/mm, preferably less than 1.2 J/mm, preferably less than 0.8 J/mm, preferably less than 0.65 J/mm, more preferably less than 0.55 J/mm, but preferably at least 0.45 J/mm.

In an embodiment, the first volumetric energy density (VED) is at least 25 J/mm$^3$, more preferably at least 30 J/mm$^3$, more preferably at least 35 J/mm$^3$, more preferably at least 45 J/mm$^3$, but preferably less than 320 J/mm$^3$, preferably less than 100 J/mm$^3$, more preferably less than 70 J/mm$^3$.

In an embodiment, the second volumetric energy density (VED) is less than 25 J/mm$^3$, preferably less than 20 J/mm$^3$, more preferably less than 16.5 J/mm$^3$, more preferably less than 15 J/mm$^3$ but preferably at least 5 J/mm$^3$, more preferably at least 10 J/mm$^3$.

In an embodiment, the manufactured product is treated by HIP (Hot Isostatic Pressing), preferably at a temperature of at least 800°C and preferably at a pressure of at least 50MPa.

In an embodiment, the representation of how the product is produced comprises applying an energy beam causing a primary volumetric energy density to at least the first and the second sub-portion and a secondary volumetric energy density to the second sub-portion to be applied; wherein the primary volumetric energy density equals the first volumetric energy density and the sum of the primary volumetric energy density and the secondary volumetric energy density equals the second volumetric energy density.

In an embodiment, the 3D-printed product is the 3D-printed product according to the first aspect.

In an embodiment, the alloy is an iron-based alloy comprising carbon and at least two or more of chromium, tungsten, molybdenum, cobalt and vanadium, and unavoidable trace amount of impurities, or wherein the alloy is iron based and comprises chromium, vanadium, molybdenum and optionally tungsten and/or cobalt, and unavoidable trace amount of impurities.

In an embodiment, the alloy is based on iron and comprises carbon: equal to or greater than 1.0 and equal to or less than 5.0 weight%; wherein the alloy further comprises at least two, preferably at least three, of chromium, tungsten, vanadium, molybdenum and cobalt in a content of: chromium: equal to or greater than 3 and equal to or less than 25weight%, tungsten: equal to or greater than 2 and equal to or less than 15 weight%, molybdenum: equal to or greater than 1 and equal to or less than 10 weight%, vanadium: equal to or greater than 3 and equal to or less than 10 weight%, cobalt: equal to or greater than 8 and equal to or less than 20 weight%; and unavoidable trace amount of impurities.

In an embodiment, the alloy comprises carbon: equal to or greater than 3.1 and equal to or less than 5.1 weight%, tungsten: equal to or greater than 18 and equal to or less than 30 weight%, chromium: equal to or greater than 15 and equal to or less than 24 weight%; and cobalt: balance.

In a preferred embodiment, the sum of the chromium and tungsten is 36 to 48wt%.

In accordance with a further aspect, there is provided a product obtainable by performing any of the methods according to the second aspect.

It will be understood that technical advantages and effects associated with features and/or embodiments of one aspect, apply to the corresponding, similar or equivalent features and/or embodiments the other aspects. It will also be apparent that the features of the various aspects and/or embodiments thereof may be applied to the other aspects and/or embodiments thereof.

BRIEF DESCRIPTION OF FIGURES

The accompanying drawings are used to illustrate presently preferred non-limiting exemplary embodiments of devices of the present disclosure. The above and other advantages of the features and objects of the disclosure will become more apparent, and the aspects and embodiments will be better understood from the following detailed description when read in conjunction with the accompanying drawings, in which:

Figure 1, showing cross-sectional views of an example Vibenite 480 (V480) sample illustrating of a method for measuring carbide cross-sectional areas wherein a) shows a SEM-image of a cross-section of the sample comprising carbide regions including Cr (dark grey) and W-based (light grey) carbides, b) the SEM-image after image processing showing Cr-based carbides in black, c) the SEM-image after image processing showing W-based carbides in black. The magnification is 10,000x.

Figure 2, schematic illustration of a cross section of a product according to the present invention with a portion (12) having a first sub-portion (14), a transition layer (16) and a second sub-portion (18).

Figure 3, a schematic illustration of a cross section of a product according to the present invention wherein the transition layer (16) has a) a continuous decrease in carbide size going from the first sub-portion (14) to the second sub-portion (18), and b) a carbide size distribution which is a mixture of the carbide sizes of the first and the second sub-portions.

Figure 4, a schematic illustration of a cross section of a product according to the present invention where the cross section is in the building direction.

Figure 5, a schematic illustration of a first embodiment (a) of a method according to the invention and a second embodiment (b) of the method according to the invention.

Figure 6, SEM images of respective cross-sections of samples made of Vibenite 150 (V150), each HIP'ed and hardened at 1180°C, printed with respective speed functions (SF), a) SF=2, b) SF=10, c) SF=27, d) SF=40 and e) SF=70. The magnification is 10,000x.

Figure 7, SEM images of respective cross-sections of samples made of Vibenite 290 (V290), each HIP'ed and hardened at 1180°C, printed with respective speed functions (SF), a) SF=2, b) SF=10, c) SF=27, d) SF=40, e) SF=70. The magnification is 5,000x.

Figure 8, shows SEM-images of respective cross-sections of samples made of V150 alloy printed with two different VEDs before and after heat treatment, wherein Fig. 8a) shows a sample 3D-printed with a VED of 307 J/mm$^3$ as-printed and b) after HIP and hardening, and Fig. 8c) shows a sample 3D-printed with a VED of 14.2 J/mm$^3$ as-printed and d) after HIP and hardening.

Figure 9, table with various parameters and characteristics for the V290 samples 3, 4 and 6 prepared according to the present invention. The schematic figures under Printing orientation are cross-sectional side views.

Figure 10, table with various parameters and characteristics for the V290 samples 7, 8 and 9 prepared according to the present invention. The schematic figures under Printing orientation are cross-sectional side views.

Figure 11, table with various parameters and characteristics for the V150 sample 3 prepared according to the present invention. The schematic figures under Printing orientation are cross-sectional side views.

Figure 12, table with various parameters and characteristics for the V480 samples 2 and 3 prepared according to the present invention. The schematic figures under Printing orientation are cross-sectional top views.

Figure 13, SEM-images of various cross-sections of two V480 samples, sample 2 and 3 in Figure 12, in which a) shows a cross-section of a low energy sub-portion of sample 2, b) shows a cross-section of a high energy sub-portion of sample 2, and c) shows a cross-section of a low energy sub-portion of sample 3, and d) shows a high energy sub-portion of sample 3.

Figure 14, SEM-images of a cross-section of a 3D-printed product made of V290 where a) is an image at 5,000x magnification and shows the second sub-portion, b) is an image at 1,000x magnification and shows the second sub-portion on the left-hand side, the transition layer in the middle, and the first sub-portion on the right-hand side, and c) is an image at 5,000x magnification and shows the first sub-portion. Figure b) includes a rough indication of the extension of the sub-portions underneath the image.

Figure 15, SEM-image of a cross-section of a 3D printed product made of V480 that shows the transition layer between the first and second sub-portions in two different scanning electron microscope magnifications a) lower magnification (200x) and b) higher magnification (500x).

Figure 16, a) schematic illustration of the wear test set up, and b) abrasive wear results including the VED used in the different alloys.

Figure 17 shows respective scratch test responses, shown as 3D perspective images, of a V150 sample 3D-printed a) with low VED (14.2 J/mm$^3$) and b) with high VED (307 J/mm$^3$) and of a V290 sample 3D-printed at c) low VED (14.2 J/mm$^3$) and d) with high VED (307 J/mm$^3$), each after 10 scratches in the same track.

## DETAILED DESCRIPTION OF INVENTION

In the present application the term three-dimensional printing or 3D-printing or free forming or additive manufacturing denotes the same thing and is used interchangeably.

In the present application the term "portion" denotes an area in a 3D-printed product according to the present invention where said area may have an area of at least 0.5 mm$^2$ but preferably not larger than 5 cm$^2$.

In the present application the term "sub-portion" denotes a part of a portion.

In the present application the term "carbide size" denotes the widest part of a cross sectional area of a carbide or carbide cluster.

In the present application the term "carbide area" and "cross-sectional carbide area" denotes the same thing and denotes the cross-sectional area of a carbide.

In the present application the term "total carbide area" denotes the cross-sectional area of all carbides. It could be presented as an area or as a percentage of the cross-sectional area.

In the present application the term "carbide cluster area" denotes the cross-sectional area of a carbide cluster. A carbide cluster are individual carbides arranged so close to each other that they act as one large carbide.

In the present application the term "average carbide area" denotes the average cross-sectional area of carbides.

In the present application the term "average carbide cluster area" denotes the average cross-sectional area of carbide clusters.

In the present application the term "maximum carbide area" denotes that a maximum of 10% of the carbides has this area or a larger area, preferably a maximum of 5%, more preferably a maximum of 1%.

In the present application the term "maximum carbide size" denotes that a maximum of 10% of the carbides has this size or a bigger size, preferably a maximum of 5%, more preferably a maximum of 1%.

In the present application the term "white carbides", "light grey carbides", "grey carbides" and "dark grey carbides" refers to how they appear in the SEM, where white or light grey carbides typically are formed from heavy metal elements such as W and Mo, and grey or dark grey carbides are typically formed from lighter metal elements such as Cr or V, in a number of different stochiometric types. The carbide types present in the Vibenite® 150 is of MC-type with V and in the Vibenite® 290 there are both MC-types and $M_6C$-types with W and Mo are present. In the Vibenite® 480, the carbides are mainly $Cr_7C_3$-types and $W_7C_2$-types. The different carbide types grow at different speeds, depending on their types and alloy composition.

In the present application the term volumetric energy density or volume energy density (VED) is defined as

$$VED \ = \frac{P}{v \cdot d_{line} \cdot d_{layer}} \ (1),$$

where P is the energy beam power, V is the scanning speed, $d_{layer}$ is the powder layer thickness, and $d_{line}$ is the hatching distance. Volumetric energy density is a measure of the energy deposited per unit volume. It is calculated by dividing the line energy by the product of the distance between melt lines $d_{line}$, sometimes referred to as hatching distance, hatch spacing, line offset, interline distance, or line-to-line distance, with the layer thickness, and is often given in J/mm$^3$.

In the present application the term "line energy" denotes a measure of the energy deposited in each melted line and is calculated by dividing the beam power by the beam scan speed, and is often given in units of J/mm. The beam power is often given directly in W (watt) for laser beams. For electron beams, the beam power must often be calculated by multiplying the beam current by the acceleration voltage applied to accelerate the electrons from the electron source down to the powder bed. Currently, all commercially available electron beam melting systems have fixed acceleration voltages, usually 60 kV. For a fixed acceleration voltage, changing the beam current directly changes the beam power.

$$VED = \frac{Line\ energy}{d_{line} * d_{layer}} \ (2)$$

where $d_{line}$ is the hatching distance and $d_{layer}$ is the thickness of the powder layer. While most free forming systems melt the powder in continuous lines, it is by no means the only way to input the required energy. The lines may be divided into shorter segments, and ultimately single points may be melted in any order deemed suitable. Also in the case of melting the powder layer point-wise, it is possible to calculate the VED and, in some cases, an equivalent of line energy. The below experiments and their parameters are given for the case where continuous lines are melted but this is simply one embodiment of the invention.

In the present application the term "melting point" or "melting temperature" denotes the same thing and is used interchangeably and denotes the liquidus point.

In the present application "common border", "transition layer", "transition zone" or "transition portion" denotes the same thing and may be used interchangeably and relates to the layer or portion arranged between a first sub-portion and a second sub-portion. A transition layer may have an essentially continuous transition in decreasing average carbide area going from the first sub-portion to the second sub-portion, or it may have a larger average carbide area than the first and the second portion. The width of the transition layer may be 1 $\mu$m or larger, or 5 $\mu$m or larger or 20$\mu$m or larger but usually not larger than 200$\mu$m, or not larger than 150$\mu$m, or not larger than 100$\mu$m.

In the present application an alloy denoted with the prefix "V" such as V150, V280, V290, and V480 are Vibenite[®] alloys.

HIP (Hot Isostatic Pressing) was performed on all tested samples according to well-known methods preferably at a temperature of at least 800°C, more preferably at least 900°C but preferably not higher than 1300°C and at a pressure of preferably at least 50MPa, preferably at a pressure of at least 80MPa but preferably not higher than 120MPa. The HIP is used as an insurance to remove any possible porosity in the materials. The V480 is only HIP'ed.

Hardening was performed on the Vibenite[®] 150 and 290 materials after HIP, by heating up the material to 1180°C and holding this temperature for approximately 15 min, and then quenching the temperature down to 25-50°C, with cooling rate of >7°C/s between 1000-800°C, followed by a tempering process 3 times 1h at 560°C with decrease to 25°C between each tempering.

Hardness was determined by using a Vickers hardness measuring machine with indention 2kg (HV 20N) and was measured on at least 3 locations on each sample. The measurements were done on ground and polished surfaces with final grinding with SiC P4000, according to standard SS-EN ISO 6507.

Measurement and analysis of the present invention is based on different alloy materials from a number of different 3D printings. For carbide measurements each sample was ground using the following (Struers) method; MD-Piano 120 (10-20 min), MD-Allegro 6 $\mu$m diamond (5 min), MD-Mol 6 $\mu$m diamond (5 min), MD-Mol 3 $\mu$m diamond (5 min), MD-Nap 1 $\mu$m diamond (5 min), MD-Chem OP-U 40 nm SiO2 at pH 9.8 (10 min). Carbide size and area was documented after hot isostatic pressure (HIP) treatment and hardening according to above (except for the cobalt based alloy which were only HIP treated) using a Scanning Electron Microscope (SEM, Zeiss Ultra 55 FEG-SEM, secondary electron image mode, the primary electron energy (EHT, extra high tension voltage) was 10 and 20 keV and the aperture used was 30 (standard) or 60$\mu$m), magnification of at least 5 000x.

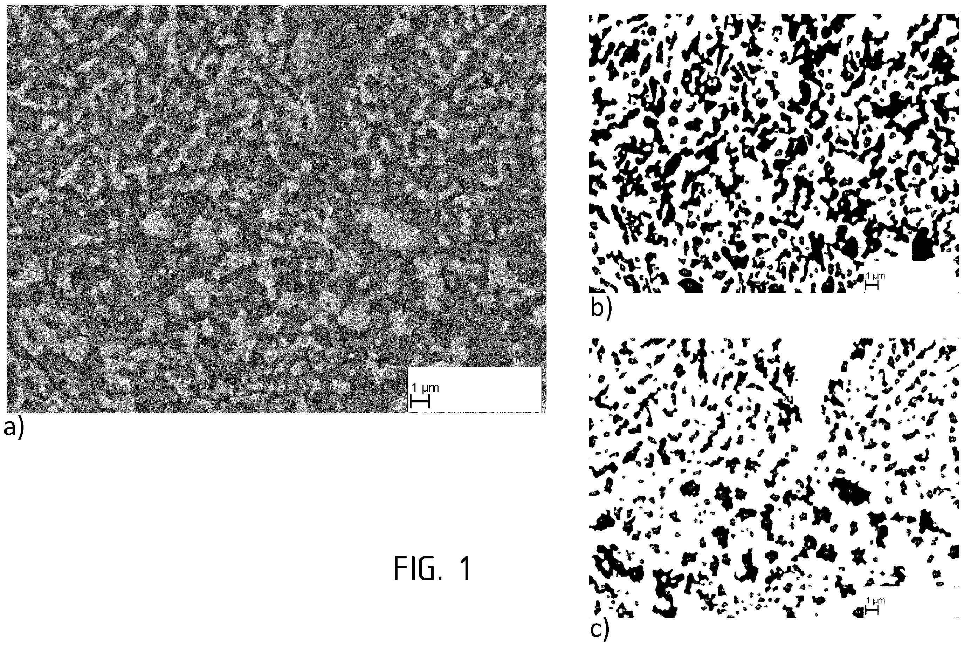

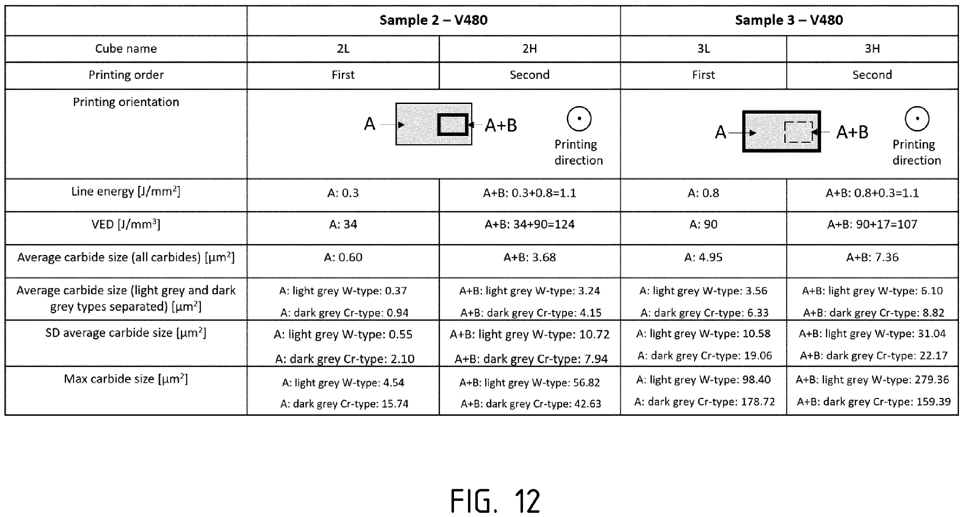

In order to analyze the images and calculate the combined area of each group of carbides two tools are mainly used, the image editor Adobe Photoshop and ImageJ, a Java-based image processing program developed at the National Institutes of Health and the Laboratory for Optical and Computational Instrumentation (LOCI, University of Wisconsin). Each group of carbides depending on the complexity of the image are separated by hand and masked from the background plate into multiple layers using different filters and tools in Photoshop. The separated images are then individually imported into ImageJ where additional image processing is done for the final calculation of cells and particles where the results are exported to a spreadsheet. The method is used in exactly the same way for all comparisons of carbide area calculations, so that the difference between two used VED's in the same material could be visualized and calculated. Example of this method is presented in Fig 1, where the carbides marked in sample 2 of V480 in Fig. 12 are shown.

It is well known that the average carbide size in a wear resistant material controls or is indicative for the wear resistance. Specifically, for abrasive wear, the protruding carbides and their correlation to the current wear and wear particles is important. It should be noted that the carbide size is most effective in reducing wear if matching the actual wear situation. Sometimes finer carbides are desired and sometimes coarser or larger is the best. For example, cemented carbide alloys could have very fine carbide grain size for high performance if used for coated metal machining inserts, but as rock drilling inserts, the average carbide size needs to be coarse to withstand the crucial wear mechanisms in a bore hole.

The 3D-printed product

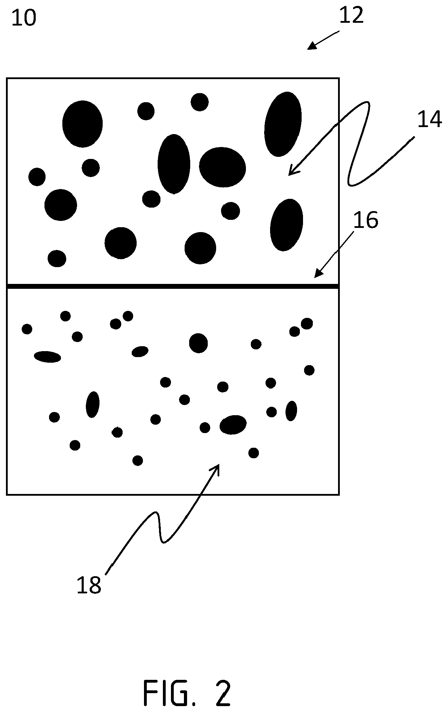

Referring now to Figure 2. Figure 2 is a schematic illustration of a cross section of a segment of a product according to the present invention. The present invention relates to a 3D printed product (10) of an iron, cobalt or nickel-based (iron balance, cobalt balance or nickel balance, respectively) alloy. The product comprises a portion (12) made of the alloy and comprises a first sub-portion (14) and a second sub-portion (18) where said sub-portions share a common border (16).

According to one embodiment of the present invention the size of the carbides may differ by at least a factor two between the first and the second sub-portion, which may, for instance, increase wear resistance. The average carbide size distribution or average carbide cross-sectional area distribution of the second sub-portion may have a smaller width than the average carbide size distribution or average cross-sectional area distribution of the first sub-portion, or *vice versa.* The width may be the full width at half maximum. The widths may differ at least by a factor of 2.

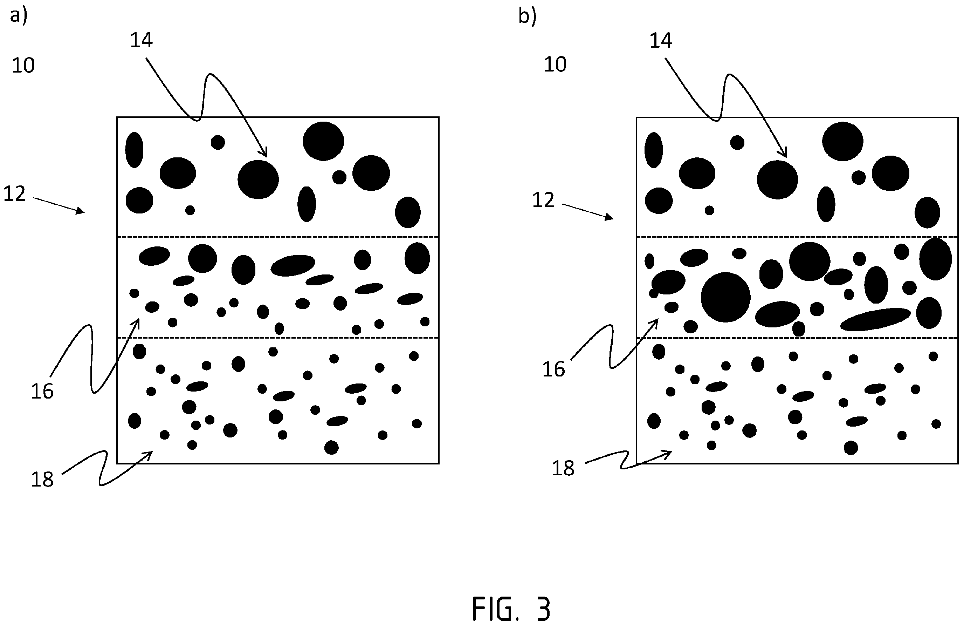

The first sub-portion comprises grains of carbides having an average carbide area which differs by a factor of at least 2 from the average carbide area of the grains of carbides of the second sub-portion. In one embodiment the first sub-portion has an average carbide area that differs by a factor of at least 2.5, preferably at least 3, more preferably at least 3.5 times, more preferably at least 4 times, more preferably at least 4.5 from the average carbide area of the grains of carbides in the second sub-portion. In one embodiment the common border has either an essentially continuous transition in decreasing average carbide area going from the first sub-portion to the second sub-portion, Figure 3a, or the transition layer has a larger average carbide area than the first and the second sub-portion, Figure 3b.

Without being bound by theory, it is believed that if the common border has a mixture of the microstructure of the first and the second sub-portions, this provides a transitional interface between the sub-portions, which reduces the internal stress.

A high carbide content is found in the present product and the total carbide area was found to be more or less the same (±10%) in the first sub-portion, common border and the second sub-portion. An advantage of the present invention is that the carbide area distribution is very narrow, especially in the sub-portion with the lowest applied volumetric energy density. The standard deviation of the carbide area for both grey and white carbides in the second sub-portion is preferably 2 or less, more preferably 1 or less. A narrow distribution is believed to provide material with more even properties and fewer sites at which fracture initiation may occur.

The alloy of the present 3D-printed product is based on iron, cobalt or nickel. Said alloy further comprises carbon and at least two or more of chromium, tungsten, molybdenum, cobalt and vanadium. The alloy further comprises unavoidable trace amounts of impurities.

In a preferred embodiment the alloy is iron based and comprises carbon and at least two, preferably at least three, of chromium, tungsten, molybdenum, cobalt and vanadium, and unavoidable trace amounts of impurities. In another preferred embodiment the alloy is iron based and comprises chromium, vanadium and molybdenum and optionally tungsten and/or cobalt.

In one embodiment the alloy comprises

Carbon: equal to or greater than 1.0 and equal to or less than 5.0 weight%;
and wherein the alloy further comprises at least two, preferably at least three of chromium, tungsten, vanadium, molybdenum and cobalt in a content of
Chromium: equal to or greater than 3 and equal to or less than 25 weight%;
Tungsten: equal to or greater than 2 and equal to or less than 15 weight%,
Molybdenum: equal to or greater than 1 and equal to or less than 10 weight%,
Vanadium: equal to or greater than 3 and equal to or less than 10 weight%;
Cobalt: equal to or greater than 8 and equal to or less than 20 weight%;
where the alloy comprises unavoidable trace amount of impurities; and
Iron: balance.

In another embodiment the alloy is cobalt based and comprises carbon and at least two of chromium, tungsten, molybdenum, and vanadium, and unavoidable trace amount of impurities.

In one embodiment the alloy comprises:

Carbon: equal to or greater than 3.1 and equal to or less than 5.1 weight%,
Tungsten: equal to or greater than 18 and equal to or less than 30 weight%,
Chromium: equal to or greater than 15 and equal to or less than 24 weight%; and
Cobalt: balance;

wherein the sum of the chromium and tungsten preferably is 36 to 48wt%. In a preferred embodiment the sum of the chromium and tungsten is 39 to 45wt%.

The alloy comprises unavoidable amounts of impurities or traces of impurities of other elements. These elements may be but is not limited to niobium, nickel, manganese, silicon, boron, tantalum, or a combination thereof. The total amount of said other elements or impurities is preferably less than 1 weight%, or less than 0.5 weight%, or less than 0.05 weight%. Preferably the alloy has a very low oxygen content, preferably an oxygen content equal to or less than 100 ppm by weight, more preferably less than 50 ppm by weight, more preferably less than 20ppm by weight.

These preferred alloy compositions are believed to exhibit very good wear resistance as well as load bearing properties or hardness.

One advantage of the present invention is that it does not require the use of any organic binders or adhesives and therefore the 3D-printed product usually comprises a combined content of iron, vanadium, molybdenum, carbon, tungsten, chromium and cobalt which is equal to or greater than 95 weight%. In one embodiment of the invention the combined content of iron, vanadium, molybdenum, carbon, tungsten, chromium and cobalt is equal to or greater than 97 weight%. Preferably the combined content of iron, vanadium, molybdenum, carbon, tungsten, chromium and cobalt is equal to or greater than 98 weight%. More preferably the combined content of iron, vanadium, molybdenum, carbon, tungsten, chromium and cobalt is equal to or greater than 99 weight%. Most preferably the combined content of iron, vanadium, molybdenum, carbon, tungsten, chromium and cobalt is equal to or greater than 99.9 weight%. In one embodiment of the invention the amount of organic compounds in the 3D-printed product is equal to or less than 0.1 weight%. Preferably, the amount of organic compounds in the 3D-printed product is equal to or less than 0.05 weight%. In one embodiment of the invention the product is essentially free from any organic compounds. The carbon in the product is mainly in the form of carbides such as tungsten and chromium carbide types, but elemental carbon and elemental tungsten can also be present in the matrix.

Not only does the present invention facilitate the preparation of products and components that have improved mechanical properties in certain sections or portions, it also makes it possible to tailor the properties in said sections or portions as well as to prepare products with advanced or complex three-dimensional shapes and forms. The product may comprise cavities, channels or holes and the product may have curved portions or spiral forms, and where said products may have different properties in different part of the product. These shapes or forms are prepared without any removal of the alloy besides any optional after treatments. The cavities, holes or channels may be curved, that is to say that their surfaces may be curved, helical or spiral or the like. In some embodiments the product contains cavities where the cavities are sealed or have an opening wherein the diameter or width of the opening is less than the diameter or width of the underlying cavity. The product may be a cutting tool such as a milling cutter, shaper cutter, power skiving cutter, drill, milling tool etc., or a forming tool such as extrusion head, wire drawing die, a hot rolling roll, etc., or wear components such as pumps or valve components, gliding or roller bearing rings, etc.

By having a product with an outer surface having the microstructure of the first sub-portion the product may obtain a harder surface. Alternatively, by having a product with an outer surface having the microstructure of the second sub-portion the product may obtain a wear resistant surface.

The method

The present method of preparing a 3D-printed product of an alloy is conducted in a 3D-printer or a free forming apparatus of any suitable kind. The 3D-printed product comprises a first sub-portion, a transition layer and a second sub-portion. A general method of 3D printing may be done as described in WO2018/169477 which is hereby incorporated by reference or based on the method described in WO2018/169477. One suitable free forming apparatus is an electron beam apparatus (EBM) from GE Additive such as the ARCAM A2X.

By applying various predetermined volumetric energy densities (VED) to different portions of the product being built the microstructure may be controlled since carbide growth and the metallic phases depends on the energy or temperature provided and time, all factors of VED. Thereby products having layers or portions with small carbides and possibly higher hardness and toughness and layers or portions having large carbides that exhibit higher wear resistance may be prepared. Depending on where in the product the different portions are wanted the representation (e.g. CAD drawing and instructions) may be tailored in order to obtain such a microphase structure. Further, by allowing for example a higher scan speed in portions where large carbides is not necessary the present method allows for a faster and a more cost-efficient 3D printing.

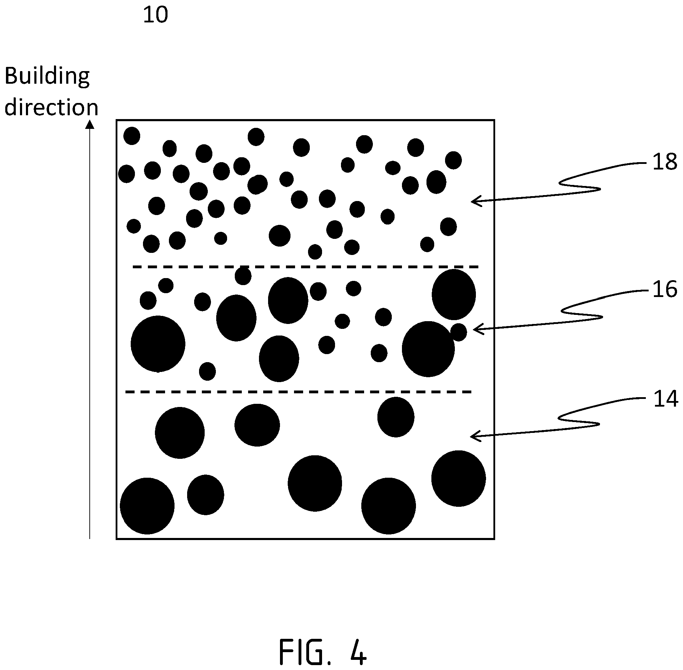

What the present inventors realized was that an energy beam such as an electron beam that provides a predetermined VED also exposes the surrounding powder to a VED that decreases radially from the point of focus of the energy beam. Thereby the microstructure may be controlled also in the transition layer. Transition layers exposed to decreasing VED is created between portions exposed to higher (first sub-portion) and lower VED (second sub-portion), providing a smoother transition between the sub-portions having different carbide sizes. This is schematically illustrated in Figure 3 and 4.

The inventors also discovered that the growth of carbide sizes needed substantially higher VED than expected. A minor change in VED did not substantially affect the carbide grain size. However, the carbide size growth effect was different depending on alloy composition, as shown in the examples. But, the invention clearly shows that different VED leads to different carbide size when used in the alloy.

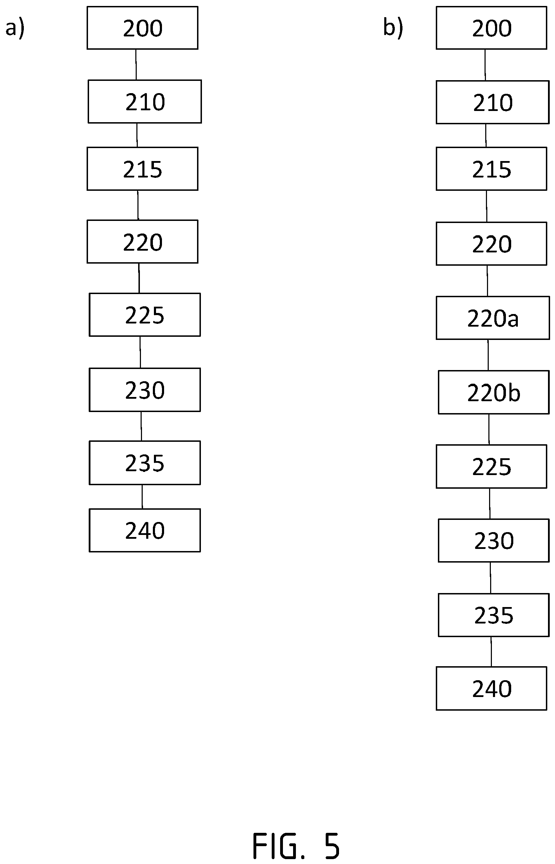

The present method is schematically shown in Figure 5a and 5b.

The method of preparing a 3D-printed product starts in step 200. A representation of the product to be produced and how it is produced is provided in step 210. The alloy is an iron, cobalt or nickel-based alloy in the form of a powder. Grains of the powder is preferably a fraction in the size range of 15-200$\mu$m, more preferably 50-150$\mu$m. The powder is preferably a spherical shaped gas atomized powder. A powder layer of a predetermined thickness is arranged in the chamber of a free forming apparatus preferably on a base plate or working table in step 215 whereafter the powder is melted by exposing the powder to the energy beam in accordance with the representation in step 220. The representation comprises an illustration or drawing of the product to be produced and how it is produced, where the representation comprises at least a portion of the product comprising a first and a second sub-portion sharing a common border or a transition layer. The first sub-portion, the second sub-portion and the transition layer are exposed to a first, second and a third volumetric energy density (VED) respectively by the energy beam. The first VED is at least two times the second VED. The third VED may continuously decrease going from the first sub-portion to the second sub-portion. Each VED may be in a preferred embodiment the sum of two or more melting steps.

Figure 5b illustrates a preferred embodiment wherein the representation comprises applying an energy beam causing the application of a primary VED to at least the first and the second sub-portion and a secondary VED to the first sub-portion. The primary VED is equal to the first VED and the sum of the primary and the secondary VED equals the second VED. Step 220 of melting the powder layer of the predetermined thickness comprises a step 220a where the powder layer is (or at least both the first and second sub-portions are) exposed to the primary VED and in step 220b the first sub-portion is exposed to a secondary VED according to the representation. Alternatively, in step 220a the first sub-portion is exposed to the secondary VED and the powder layer is (or at least both the first and second sub-portions are) exposed to the primary VED in step 220b according to the representation. The melted powder is then allowed to at least partly solidify into a multiphase metal alloy in step 225. Another powder layer may then be applied on top of the solidified alloy in step 230. During the method the product being built is preferably kept heated at 300°C or higher in order to prevent crack formation. The obtained 3D-printed product may be treated by HIP (Hot Isostatic Pressing) according to well-known methods or preferably treated in a combined HIP and hardening process in step 235. The method stops in step 240. The energy beam is preferably an electron beam or a laser beam.

Depending on the wanted microstructure of the first sub-portion, transition layer and second sub-portion the representation is adapted by adjusting the parameters beam power or current, scan speed, hatching distance, powder layer thickness and beam focus. Said adjustments results in different first, second and third VED. First and second VED are predetermined while the third volumetric density is a result or a combination of the first and second volumetric densities. The transition layer formed by the third VED is exposed to a radially decreasing first and second VED from the focus point of the beam when the energy beam melts the powder in the first sub-portion and second sub-portion respectively.

In a preferred embodiment the first VED is at least three times the second VED, more preferably at least four times. Varying the scan speed or line energy is an efficient and a time saving way of controlling or obtaining different carbide sizes in the different portions. In one embodiment the scan speed of the second sub-portion is at least three times higher than the scan speed of the first sub-portion. In yet another preferred embodiment the scan speed of the second sub-portion is at least five times higher, more preferably at least 10 times higher, than the scan speed of the first sub-portion. In one embodiment, where the energy beam is an electron beam and the layer thickness is 160 $\mu$m, the line energy of the first sub-portion is at least 3.0 J/mm, more preferably at least 5.0 J/mm, more preferably at least 7.0 J/mm, but preferably less than 15 J/mm, preferably less than 12 J/mm, preferably less than 10 J/mm, and where the line energy of the second sub-portion is less than 2.0 J/mm, preferably less than 1.6 J/mm, preferably less than 1.2 J/mm, preferably less than 0.8 J/mm, preferably less than 0.65 J/mm, more preferably less than 0.55 J/mm, but preferably at least 0.45 J/mm.

The beam power is preferably between 200 and 3000 W, preferably between 300 and 1800 W, the hatching distance is preferably between 0.05 and 1 mm, preferably between 0.1 and 0.3 mm. and the beam focus is preferably between 0.1 and 1 mm, preferably between 0.3 and 0.7 mm. In one embodiment the beam power, the hatching distance and the beam focus are the same in the first and the second VED.

The beam focus may be the energy beam diameter at the powder layer surface. The beam focus may be equal to the full-width at half-max value, i.e. the beam width at half of the maximum intensity. The beam intensity profile may be a normal distribution. If the beam is not perfectly round, the average diameter may still be calculated using suitable methods and used as the beam focus. The beam focus is sometimes called beam diameter, beam size, beam spot, beam spot diameter or beam spot size. The beam focus point is taken to be the centre of the beam focus.

The representation used when producing the product contains a disclosure of the product to be produced and how it should be produced. Said representation includes a disclosure of the three-dimensional shape of the product and said disclosure could be in the form of a drawing or picture configured to be readable for the 3D-printer such as CAD drawing or model. The arrangement and the location of the first sub-portion, the transition layer and the second sub-portion including the size of each portion are also disclosed in the representation as well as the settings of parameters of the energy beam in the free forming apparatus in order to obtain a first, second and third volumetric energy density during melting of said portions. The representation preferably further comprises the steps of the present method including the order of the steps, pressure in the chamber and powder layer thickness and preferably also temperature of the building plate.

The energy beam may be a laser beam or an electron beam (EBM), and the beam is scanned across the powder in a pattern according to the representation. The duration of the scan may range from milliseconds to minutes depending on the alloy and the size of the particles in the powder.

The advantage of using EBM in comparison with laser is that thicker powder layers may be prepared and powders with larger particles may be used. In addition, EBM could be used to maintain a higher detail temperature during the build, to minimize thermal gradients and detail distortion and cracking, which is especially important for hard alloys. The growth of the carbides occurs during the solidification of the molten material and is mainly influenced by the heat diffusion rate, the heat of solidification and the heat diffusion distance. The solidification rate in traditional casting techniques may be enhanced by cooling down the melted material using any suitable technique, such as casting in highly-cooled refractory molds or to cast smaller details. Also, in existing prior art cladding techniques the cooling speed is also high, but not high enough to prevent carbide growth. Cladding techniques are also known not to result in a fully dense material.

The content of oxygen and other impurities in the chamber or reactor should be as low as possible, such as equal to or less than 10 ppm (corresponding to a gas purity grade 5), or equal to or less than 1 ppm (corresponding to a gas purity grade 6) and the environment in the reactor may comprise inert gases such as argon or helium. The vacuum pressure in the reactor may be $1\text{-}5\times0^{-3}$mBar or lower, preferably $1\text{-}5\times10^{-4}$ mBar or lower. In one embodiment the initial pressure in the reactor is around $1\text{-}10\times10^{-5}$mBar ($1\text{-}10\times10^{-3}$ Pa) and then an inert gas such as helium or argon is added to increase the pressure to $1\text{-}5\times10^{-3}$mBar or lower.

In order to avoid crack formation in the product and for improving the properties of the same, the product is maintained at an elevated temperature (first elevated temperature) during the printing or the formation of the 3D-printed product. Crack formation may be due to a combination of increased internal stresses and increased material brittleness at lower temperatures. The increase in internal stresses is caused by the volume changes at the phase transformations and also ordinary thermal expansion. The elevated temperature to avoid crack formation may be 300 °C or higher, or 400 °C or higher, or 500 °C or higher, or 550 °C or higher, or 600 °C or higher, or 700 °C or higher, or 800°C or higher, or 900°C or higher, but usually not higher than 1 100°C. For example, the base plate or the working table that the product is built on may comprise a heater or the product is kept heated through the melting process. The 3D-printed product may therefore exhibit a temperature gradient within during the building of the product. The heating of the product should be controlled so that the temperature of the built product during the building process, as measured under the start plate, is preferably 600 °C or higher, or 700 °C or higher, or 750°C or higher, but usually 900°C or lower or 850°C or lower, or 800°C or lower. In one embodiment the temperature is 720°C-790°C such as 780°C. The temperature should of course be low enough for the melted powder to at least partly solidify before the application of a new powder layer. This allows a lower temperature which not only makes the method cheaper but may also have a positive influence on the microstructure.

An advantage is that the present method is applicable to any iron, nickel or cobalt based alloy comprising carbon and carbide forming compounds such as chromium and tungsten allowing the producer to control and tailor the properties of the obtained product by adjusting the VED in the different portions.

The obtained 3D-printed product is preferably treated by HIP (Hot Isostatic Pressing) according to well-known methods in step 235, preferably at a temperature of at least 800°C, more preferably at least 900°C and at a pressure of preferably at least 50MPa, preferably at a pressure of at least 80MPa. In a preferred embodiment the obtained 3D-printed product is treated in a combined HIP and hardening process in step 235. In another preferred embodiment the alloy is cobalt based and the obtained 3D-printed product is treated by HIP. A preferred treatment is disclosed in WO2020/149787 which is hereby incorporated by reference. This may be done using a Quintus HIP apparatus preferably equipped with Uniform Rapid Quenching (URQ®).

All the embodiments disclosed herein should be understood as a few illustrative examples of the present invention. It will be understood by those skilled in the art that various modifications, combinations and changes may be made to the embodiments and aspects without departing from the scope of the present invention. In particular, different part solutions in the different embodiments can be combined in other configurations, where technically possible.

ExAMPLEs

In the examples here below an Arcam A2X EBM 3D printer was used.

In the examples different alloy powders are used and their compositions are disclosed in Table 1.

Table 1. Main constituting elements (weight%) in the different powders used.

| Material | C | Cr | W | Co | V | Mo | Fe |
|----------|-----|------|------|------|-----|-----|-----|
| V150 | 1.5 | 4.0 | 2.5 | | 4.0 | 2.5 | Bal |
| V280 | 2.3 | 4.2 | 6.5 | 10.5 | 6.5 | 7.0 | Bal |
| V290 | 2.5 | 4.0 | 11.0 | 16.0 | 6.3 | 5.0 | Bal |
| V480 | 3.6 | 20.5 | 22.5 | Bal | | | |

Example 1

Samples of two different iron-based alloys (one without Co and one with Co) Vibenite® 150 (V150) and Vibenite® 290 (V290) were 3D printed with various scan speeds. All samples were 3D printed with a powder layer thickness of 160 μm.

The samples were analysed regarding carbides size and area and hardness. Hardness was determined by using HV1kg/10N and 5 indentations per sample, Table 2.

Table 2. Hardness at different VED, line energies and scan speeds for different alloy samples. LE=Line energy, SS= Scan Speed and SF=SpeedFunction

| Sample | VED (J/mm$^3$) | 307.4 | 89.7 | 47.6 | 35.8 | 24.5 | 14.2 | Approximate diagonal indentation [$\mu$m] |
|---|---|---|---|---|---|---|---|---|
| | LE (J/mm) | 9.84 | 2.87 | 1.52 | 1.15 | 0.79 | 0.45 | |
| | SS (mm/s) | 30.5 | 104.5 | 197 | 261.8 | 382 | 659.5 | |
| | SF value | 2 | 10 | 20 | 27 | 40 | 70 | |
| V150[1] | | 587 | 598 | 605 | | 621 | 639 | 55-60 |
| V150[2] | | 825 | 841 | 843 | | 839 | 833 | 55-60 |
| V290[1] | | 599 | 581 | | 577 | 591 | 602 | 50 |
| V290[2] | | 1110 | 1093 | | 1065 | 1083 | 1078 | 40 |
| [1]As printed [2]HIP'ed and hardened | | | | | | | | |

As can be seen, the hardness of the samples remained almost the same.

For reproducibility, the SpeedFunction value ("SF") has also been given above. This is a machine setting on the A2X that determines the scan speed depending on the beam current. For the same beam current, a higher Speed-Function value gives a higher scan speed. The details of the underlying function is only known by the machine maker.

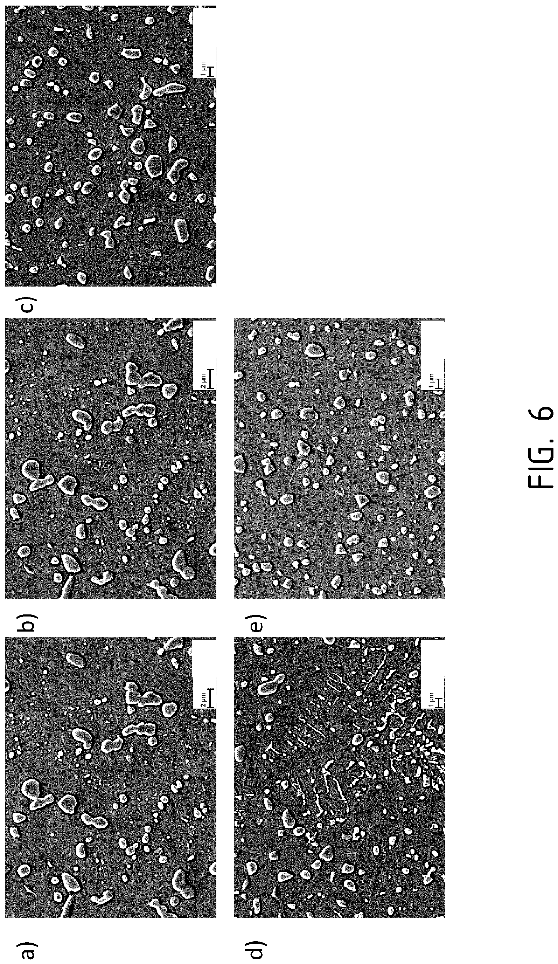

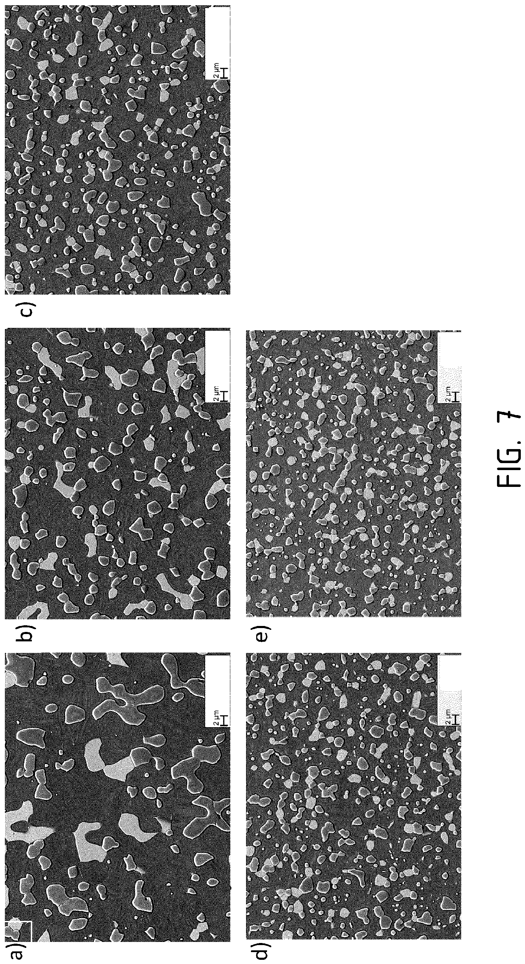

Table 3 and Figure 6 and 7 shows that the carbide area is not affected but the maximum size is reduced when the volumetric density (VED) is reduced by an increased speed function value (SF) or scan speed. As a consequence of similar carbide area and reduced maximum carbide size the carbide size distribution is narrower. The standard deviation for white and grey carbide size distribution decreases from 5.19 and 10.04 respectively to 0.71 and 1.09 respectively when increasing the speed function from 2 to 70 for Vibenite 290. In Table 3, all values are calculated from images at 5000x magnification. At these magnifications, the carbides changed appearance in the V150 SF=2 (Fig. 6a), with several large carbides grown, but also a growth of very, very fine carbides (size not seen in the SF=70 sample, Fig 6e). This results in a lower average carbide area average value of the SF=2 than the SF=70, but it is obvious that the largest carbides grow. For the V290 material, the total average carbide area for VED=14.2 is 0.89 $\mu$m$^2$ and for VED=307.4 it is 3.06 $\mu$m$^2$, an increase of 3.4 times.

Table 3. Carbide analysis for HIP'ed and hardened samples. The min areas shown are very small and most likely a result of the resolution in the image and not a certain min value.

| Carbides | V150, SF2 | V150, SF70 | V290, SF2 | V290, SF70 |
|---|---|---|---|---|
| White carbide area (%) | 10.02 | 10.17 | 7.34 | 7.71 |
| White max area ($\mu$m$^2$) | 5.88 | 2.05 | 33.8 | 3.25 |
| White min area ($\mu$m$^2$) | 6.9e-4 | 6.9e-4 | 0.06 | 6.9e-4 |
| White average area ($\mu$m$^2$) | 0.078 | 0.112 | 1.295 | 0.516 |
| White size distribution (SD) | 0.385 | 0.245 | 5.192 | 0.712 |
| Grey carbide area (%) | - | - | 18.7 | 18.4 |
| Grey max area ($\mu$m$^2$) | - | - | 54.19 | 8.51 |
| Grey min area ($\mu$m$^2$) | - | - | 0.08 | 6.9e-4 |
| Grey average area ($\mu$m$^2$) | - | - | 6.6 | 1.28 |
| Grey size distribution (SD) | - | - | 10.04 | 1.094 |

(continued)

| Carbides | V150, SF2 | V150, SF70 | V290, SF2 | V290, SF70 |
|---|---|---|---|---|
| Total carbide area ($\mu$m$^2$) | 10.02 | 10.17 | 26.03 | 26.13 |
| Average area all white and grey carbides ($\mu$m$^2$) | | | 3.06 | 0.89 |
| SF2 = SpeedFunction value 2, SF70= SpeedFunction value 70. SD = standard deviation | | | | |

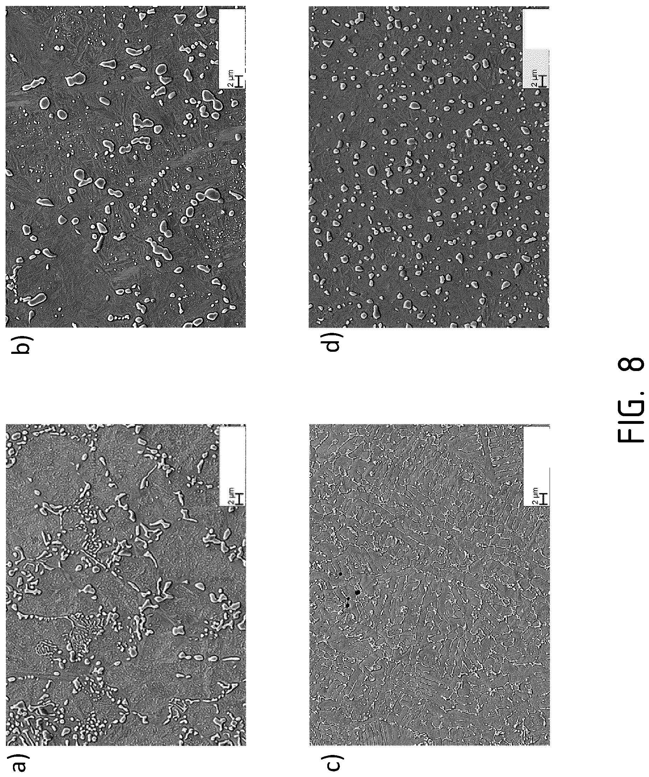

In Figure 8, the innovation also shows the difference from the different used VED before and after heat treatment. Fig 8a) and 8c) show the as-printed microstructure at VED=307.4 and 14.2 respectively, and 8b) and 8d) show the microstructure after HIP and hardening at 1180°C, plus 3 times 560°C in 1h (standard hardening procedure). Here, it is shown that the microstructure is clearly changed by different applied VED, which is resulting in different carbide sizes also after heat treatments. Of course, all microstructures shown here could be of practical use in many different applications, so that the innovation could be used in as-printed condition also.

Example 2

In example 2, the effect of changes in the heating parameters, line energy or VED on the microstructure are studied for material volumes in direct contact with each other ("morphed") and not only printed as separated cubes. The samples tested, and the setting of the different heating parameters are disclosed in Table 4. Samples 1-6 were printed with a layer thickness of 160 $\mu$m and sample 7-9 with a layer thickness of 50 $\mu$m.

Table 4. Heating parameter settings.

| Sample ID | Material | BP (W) | HD (mm) | BF offset (mA) | SF | SS (mm/s) | LE (J/mm) | VED (J/mm$^3$) |
|---|---|---|---|---|---|---|---|---|
| 1-SF2 | V150 | 317.44 | 0.2 | 9 | 2 | 32.25 | 9.84 | 307.60 |
| 2-SF20 | | 317.44 | 0.2 | 9 | 20 | 208.5 | 1.52 | 47.58 |
| 3-SF70 | | 317.44 | 0.2 | 9 | 70 | 698 | 0.45 | 14.21 |
| 4-SF2 | V290 | 317.44 | 0.2 | 9 | 2 | 32.25 | 9.84 | 307.60 |
| 5-SF27 | | 317.44 | 0.2 | 9 | 27 | 277 | 1.15 | 35.81 |
| 6-SF70 | | 317.44 | 0.2 | 9 | 70 | 698 | 0.45 | 14.21 |
| 7-VED17 | V480 | 960 | 0.3529 | 5 | 60.28 | 3200 | 0.3 | 17 |
| 8-VED34 | | 960 | 0.1765 | 5 | 60.28 | 3200 | 0.3 | 34 |
| 9-VED91 | | 960 | 0.1765 | 5 | 22.92 | 1200 | 0.8 | 90.65 |
| BP=Beam Power, HD=Hatching Distance, BF=Beam focus, SF= Speed function value, SS=Scan Speed, LE=Line Energy. Beam focus was kept the same for all samples. | | | | | | | | |

Note that while the machine does not provide support for measuring the beam focus, the focus is controlled by the beam focus offset parameter listed above. A smaller beam focus offset value gives a smaller beam focus. Since this value was not changed, it is only provided for reproducibility.
All samples were analyzed using SEM and the carbide size was calculated as described above.

Example 3

Samples of iron-based alloy, Vibenite 150 and 290, were prepared as disclosed above by varying the line energy to obtain different VED. Powder layer thickness was 160$\mu$m. This example shows that the different VED could be used in different zones of the same material - close to each other. This example also shows the effect in three different alloys with a broad difference in carbide content: V150, V290 and V480.

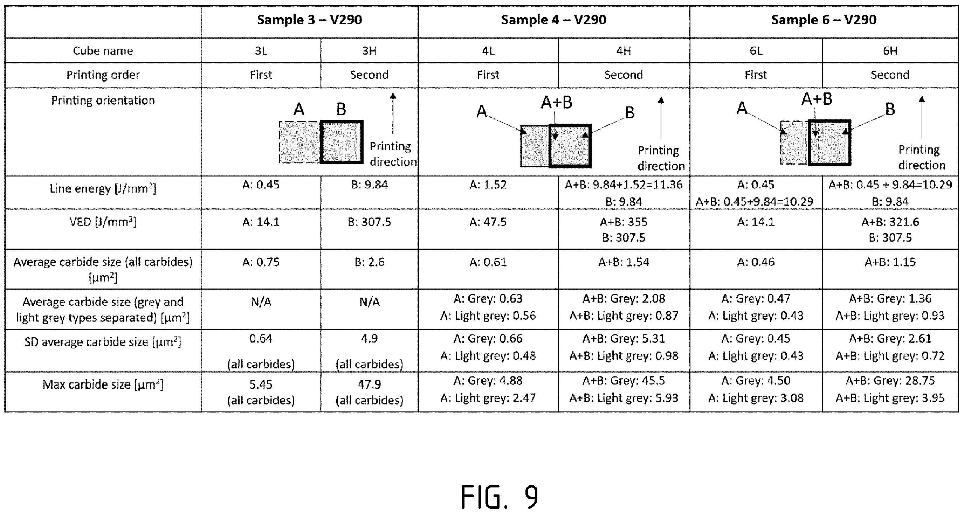

Figure 9-11 describe the energy levels used in the different sub-portions, the line energy used, how the samples were printed and the average carbide size, standard deviation and the maximum carbide size. All samples were analyzed using SEM and the carbide size was calculated as described above, not all calculations have been performed. Figure

EP 4 414 106 A1

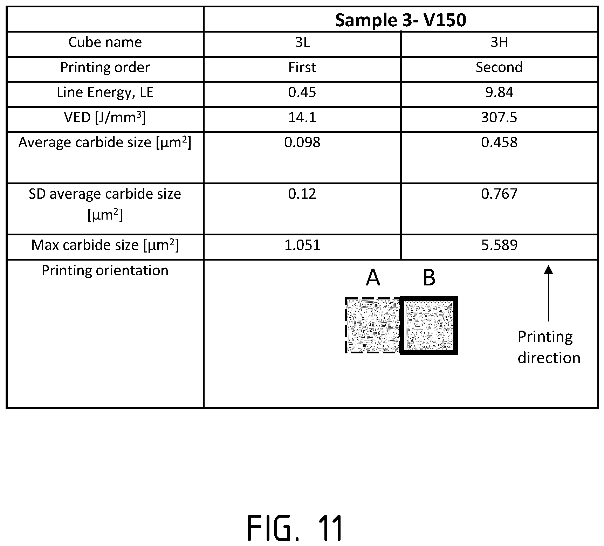

9-10 relate to V290 and Figure 11 relates to V150.

All samples were printed on a support structure connected to the base plate. The line thicknesses used to illustrate A and B in the figures 9-11 indicates the applied energy level.

In figure 9, the samples were printed on a support structure connected to the base plate. In sample 3 cube A is an example of the second sub-portion and cube B is an example of the first sub-portion.

In samples 4 and 6 the cubes A and B to which the beam was applied were partly overlapping, resulting in additional zone A+B. The applied energy to zone A+B equals the amount of applied energy to cube A plus the energy applied to cube B. Cube A is an example of the second sub-portion and zone A+B is an example of the first sub-portion.

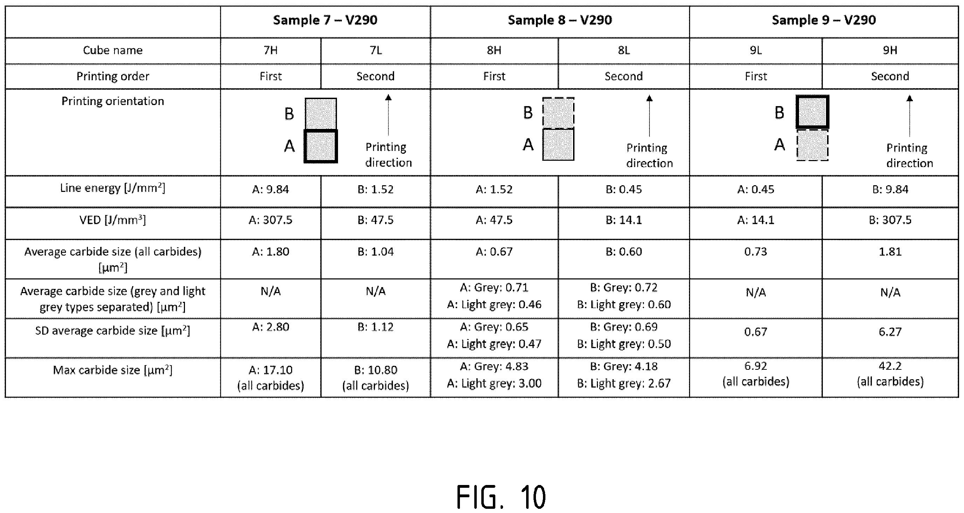

In figure 10, cube B was printed directly upon the cube A. In sample 7 and 8 cube A is an example of the first sub-portion and cube B is an example of the second sub-portion. In sample 9 cube A is an example of the second sub-portion and cube B is an example of the first sub-portion.

In figure 11, sample 3-V150, cube A is an example of the second sub-portion and cube B is an example of the first sub-portion.

Samples of a cobalt-based alloy, Vibenite®480 (V480), were prepared using the settings as disclosed above according to the present invention where the volume energy was varied, partly independently of the line energy. Powder layer thickness was 50$\mu$m. In Figure 12, in the printing orientation the more solid or thicker the line, the higher the VED. All samples were analyzed using SEM and the carbide size was calculated as described above.

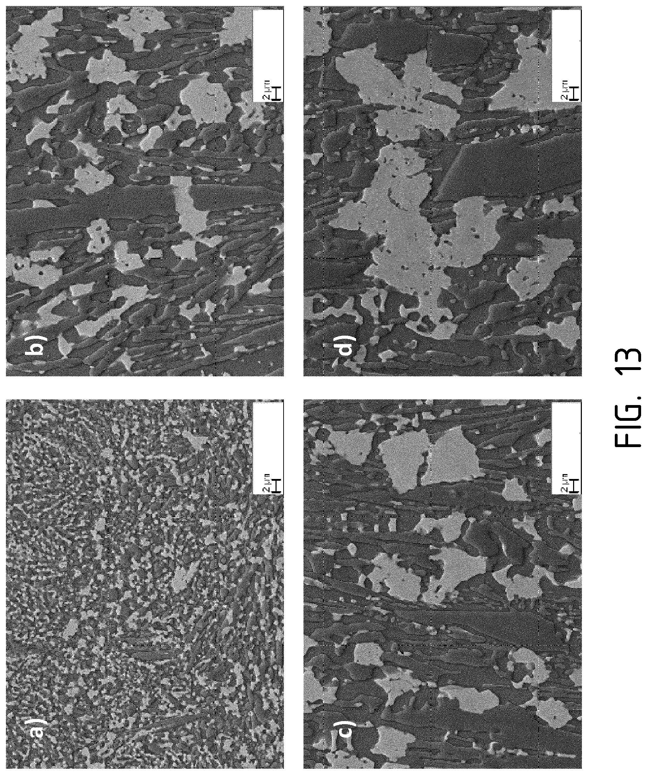

Figure 12 discloses the energy level used in the different sub-portions, the VED, how the samples were printed and the average carbide size, standard deviation and the maximum carbide size and figure 13 discloses the microstructure of the different sub-portions. In figure 12, the beam is applied with a first energy to the zone indicated with A and with a second energy to the zone indicated with A + B. For sample 2 the first energy (VED =34J/mm$^3$) was lower (L) than the second energy (H, VED=90J/mm$^3$), in total an energy of 124J/mm$^3$ was applied to A+B. For sample 3 the first energy (VED =90J/mm$^3$) was higher (H) than the second energy (L, VED=17J/mm$^3$), in total an energy of 107J/mm$^3$ was applied to A+B. Sample 2, zone A is an example of the second sub-portion and zone A+B is an example of the first sub-portion. In sample 3 the VED applied to zone A+B is a factor of around 1.2 of the VED applied to zone A.

The carbide size estimations together with the SEM pictures of figure 13 shows that the carbide size of the high energy sub-portion are significantly larger than the carbides of the low energy sub-portion.

Example 4

The purpose of the example was to study the transition zone or part of a 3D printed product according to the present invention. The sample used was prepared according to Example 2.

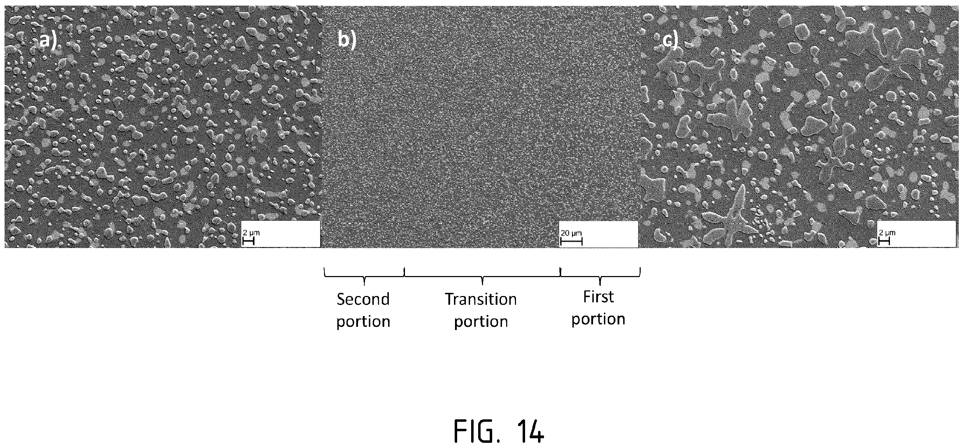

The alloy used was V290 and a cube was printed where a first sub-portion was printed using high energy (SF = 2) and a second sub-portion using low energy (SF = 70). The printing of each sub-portion was done in a single melting step. After HIP the first and the second sub-portions as well as the transition portion were analyzed using SEM and suitable software to calculate the carbide size. Figure 14 shows SEM from the second sub-portion (a), transition portion (b), and the first sub-portion (c). Note the varying magnifications used.

Table 5. Carbide area and standard deviation (Std) of the first, second and transition portion.

| Portion | Area | |
|---|---|---|
| | Mean | Std |
| First | 1.638 | 4.667 |
| Second | 0.745 | 0.729 |
| Transition | 1.842 | 2.991 |

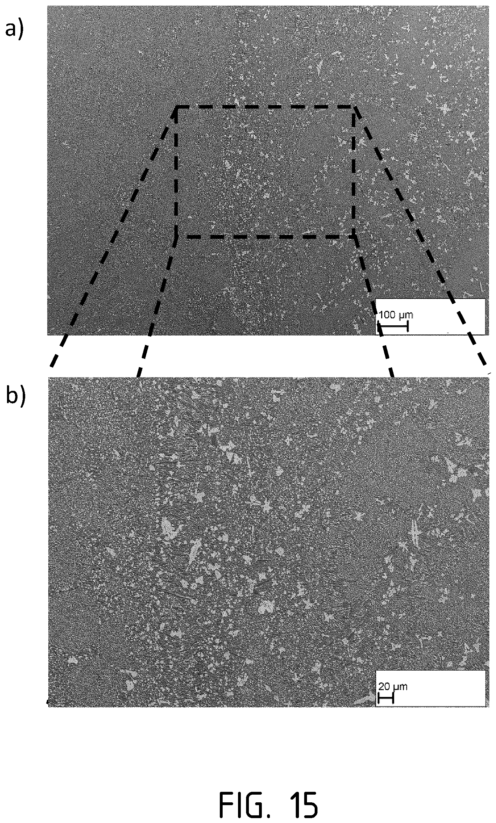

To further study the transition layer, a cube of V480 was printed where a first sub-portion was printed using high energy (SF = 2) and a second sub-portion using low energy (SF = 45), the parameters used are listed in Table 6. The printing of each sub-portion was done in a single melting step. After HIP the first and the second sub-portions as well as the transition portion were analyzed using SEM. Figure 15 discloses a) the transition layer at 200x magnification, and b) the transition layer at 500x magnification in a V480 sample. As can be seen there is a distinct transition layer.

Table 6. Heating parameter settings for V480 sample in Fig 15

| Sample ID | Layer thickness ($\mu$m) | BP (W) | HD (mm) | BF offset (mA) | SF | SS (mm/s) | LE (J/mm) | VED (J/mm$^3$) |
|---|---|---|---|---|---|---|---|---|
| 1-SF2 | 160 | 720 | 0.2 | 8.5 | 2 | 130.5 | 5.52 | 172.41 |
| 2-SF45 | | 720 | 0.2 | 8.5 | 45 | 1744.2 | 0.41 | 12.90 |
| BP=Beam Power, HD=Hatching Distance, BF=Beam focus, SF= Speed function value, SS=Scan Speed, LE=Line Energy. | | | | | | | | |

Example 5

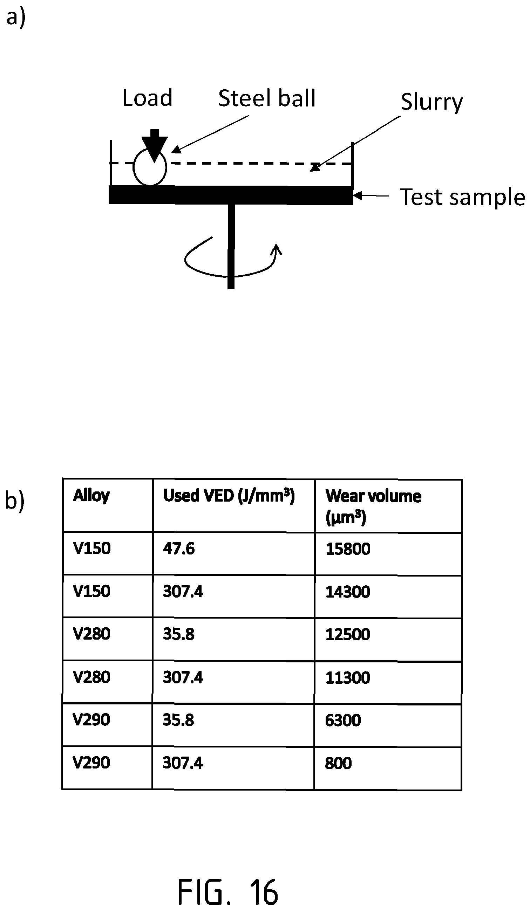

A wear test was conducted to show the difference in abrasive wear performance of the different average carbide sizes in this innovation. The V150, V280 and V290 samples used were prepared according to Example 2 and with a comparison between "normal VED" and "highly increased VED".
The wear test, a classical pin-on-disc setup, is illustrated in Figure 16a.

Load: 20N

Sliding speed: 50mm/s

Sliding distance: 50m (1000s)

Slurry: 400 mesh, $Al_2O_3$

Referring to figure 16b, the wear results point at a very powerful effect of having coarse or larger average carbide size (as indicated by the used or applied VED), but at the same hardness of the alloys. For Vibenite® 150, a decrease of wear volume of 10.4% is achieved, for Vibenite® 280, a 9.6% decrease is achieved and for Vibenite® 290, a 87.3% decrease of wear volume is achieved.

Example 6

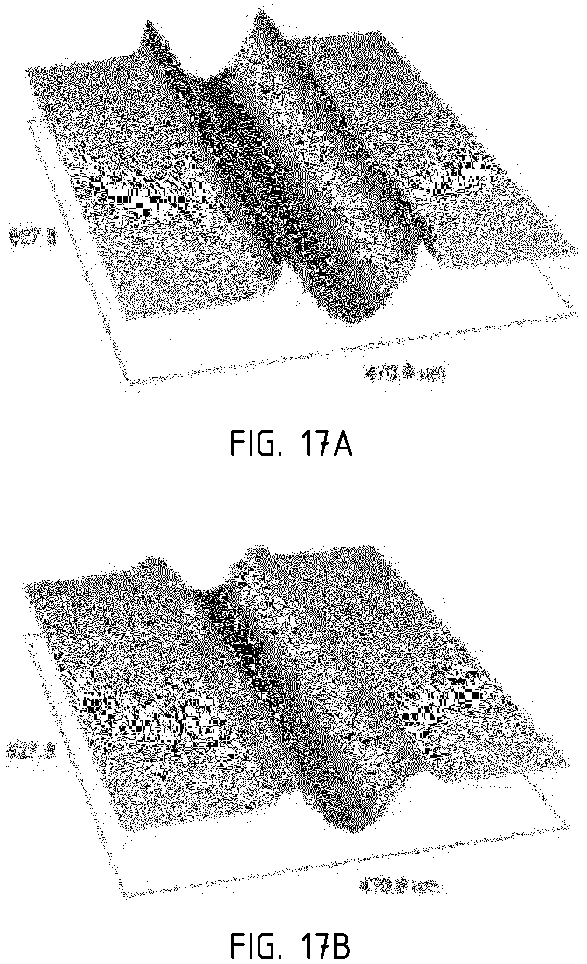

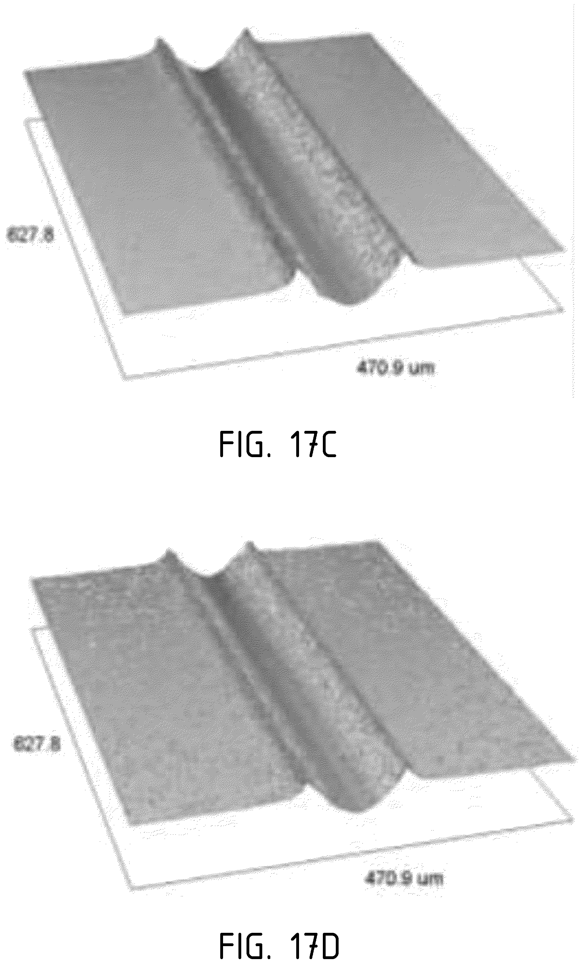

Scratch tests were performed on the V150 and V290 samples from Example 2, 3D-printed with high VED (307.4 J/mm$^3$) and low VED (14.2 J/mm$^3$). The scratch test was performed with a diamond tip with radius 200$\mu$m at 40 N normal load. The result after 10 scratches in the same track are presented in Figure 17a to 17d (same scale on all figures, wherein blue indicates low height, green average height, and red high height). It is clearly seen that the coarser or larger carbide sizes from high VED for both V150 and V290 in Figures 17b and 17d respectively result in shallower scratches than the low VED samples in Figures 17a and 17c respectively, pointing at a higher wear resistance.
Although the present invention has been described with reference to specific embodiments, also shown in the appended drawings, it will be apparent to those skilled in the art that many variations and modifications can be done within the scope of the invention as described in the specification and defined with reference to the claims below.

**Claims**

1. A 3D-printed product made of at least one alloy wherein the alloy is based on iron, cobalt or nickel and wherein the 3D-printed product comprises a portion made of the alloy and wherein the portion comprises a first sub-portion and a second sub-portion, wherein the first sub-portion and the second sub-portion share a common border, wherein each of the first and second sub-portions comprises a metal matrix and grains of carbides embedded in the metal matrix;
wherein the first sub-portion comprises grains of carbides having an average carbide cross-sectional area which differs by a factor of at least 2 from an average carbide cross-sectional area of the grains of carbides of the second sub-portion.

2. The 3D-printed product according to claim 1, wherein the grains of carbides in the first sub-portion have an average carbide cross-sectional area which differs by a factor of at least 2.5, preferably at least 3, more preferably at least 3.5 times, even more preferably at least 4 times, most preferably at least 4.5 from the average carbide cross-sectional area of the grains of carbides in the second sub-portion.

3. The 3D-printed product according to claim 1 or 2, wherein a total carbide cross-sectional area in percentage of a total cross-section of the first sub-portion and the second sub-portion are the same $\pm 10\%$.

4. The 3D-printed product according to claim 1, 2 or 3, wherein the portion has a cross-sectional area of at least 0.5 $mm^2$, preferably smaller than 5 $cm^2$.

5. The 3D-printed product according to any one of the preceding claims, wherein a first standard deviation associated with the average carbide cross-sectional area of the first sub-portion differs by at least a factor of 4 from a second standard deviation associated with the average carbide cross-sectional area of the second sub-portion, preferably at least a factor of 5, more preferably at least a factor of 6, most preferably at least a factor of 7.

6. The 3D-printed product according to any one of the preceding claims, wherein:

the common border has a width in a range of 1-200 $\mu$m; and/or
either the common border has a continuous transition in average carbide cross-sectional area going from the first sub-portion to the second sub-portion, or the common border has a larger average carbide cross-sectional area than each of the first and the second sub-portion; and/or
a first standard deviation associated with the average carbide cross-sectional area of the first sub-portion differs by at least a factor of 4 from a second standard deviation associated with the average carbide cross-sectional area of the second sub-portion, preferably at least a factor of 5, more preferably at least a factor of 6, most preferably at least a factor of 7; and/or wherein a maximum carbide cross-sectional area of the first sub-portion is at least 2 times larger than a maximum carbide cross-sectional area of the second sub-portion, preferably at least 3 times larger, more preferably at least 4 times larger, even more preferably at least 5 times larger, most preferably 6 times larger.

7. The 3D-printed product according to any of the preceding claims, wherein the 3D-printed product is obtained from a single powder alloy.

8. The 3D-printed product according to any one of the preceding claims, wherein the 3D-printed product is a tool, or a tool part, wherein the tool is a milling cutter, a shaper cutter, a power skiving cutter, a drill, a milling tool, an extrusion head, a wire drawing die, a hot rolling roll, a gliding bearing, roll bearing ring or auger.

9. A method of additively manufacturing a product made of at least one alloy in a free forming apparatus having a chamber, wherein the alloy is based on iron, cobalt or nickel; and wherein the method comprises:

a. arranging a layer of a powder of the alloy in the chamber;
b. melting the powder by exposing the powder to an energy beam in accordance with a digital representation of the product and how the product is to be produced;
c. letting the melted powder solidify; and
d. repeating the steps a, b, and c in accordance with the digital representation such that at least a part of the product is manufactured,

wherein the digital representation of the product comprises at least a portion of the product, the portion comprising a first and a second sub-portion, wherein the first and the second sub-portion share a common border,
wherein the representation of how the product is to be produced comprises instructions for the free forming apparatus to apply, to the portion, an energy beam with one or more corresponding heating parameters, wherein the energy beam is to be applied with a first set of the heating parameters to the first sub-portion and with a second set of the heating parameters to the second sub-portion,
wherein the first set of the heating parameters result in the application of a first volumetric energy density to the first sub-portion and a second volumetric energy density to the second sub-portion, wherein the first volumetric energy density differs by at least a factor 2 from the second volumetric energy density.

10. The method according to claim 9, wherein:

the energy beam is an electron beam or a laser beam; and/or
the heating parameters comprise at least one of: a beam power, a line energy, a scan speed, a hatching distance and a beam focus, wherein preferably the one or more heating parameters being varied is the line energy or the scan speed, wherein more preferably the line energy or scan speed of the second sub-portion differs by at least a factor of three from respectively the line energy or scan speed of the first sub-portion.

11. The method according to any one of claims 9 and 10, wherein

the beam power is between 200 and 3000 W, preferably between 300 and 1800 W; and/or
the hatching distance is between 0.05 and 1 mm, preferably between 0.1 and 0.3 mm; and/or
the beam focus is between 0.1 and 1 mm, preferably between 0.3 and 0.7 mm; and/or
the line energy of the first sub-portion is at least 3.0 J/mm, more preferably at least 5.0 J/mm, more preferably at least 7.0 J/mm, but preferably less than 15 J/mm, preferably less than 12 J/mm, preferably less than 10 J/mm and wherein the line energy of the second sub-portion is less than 2.0 J/mm, preferably less than 1.6 J/mm, preferably less than 1.2 J/mm, preferably less than 0.8 J/mm, preferably less than 0.65 J/mm, more preferably less than 0.55 J/mm, but preferably at least 0.45 J/mm; and/or
the first volumetric energy density (VED) is at least 25 $J/mm^3$, more preferably at least 30 $J/mm^3$, more preferably at least 35 $J/mm^3$, more preferably at least 45 $J/mm^3$, but preferably less than 320 $J/mm^3$, preferably less than 100 $J/mm^3$, more preferably less than 70 $J/mm^3$, and wherein the second volumetric energy density (VED) is less than 25 $J/mm^3$, preferably less than 20 $J/mm^3$, more preferably less than 16.5 $J/mm^3$, more preferably less than 15 $J/mm^3$ but preferably at least 5 $J/mm^3$, more preferably at least 10 $J/mm^3$.

12. The method according to any one of claims 9 to 12, wherein the representation of how the product is produced comprises applying an energy beam causing a primary volumetric energy density to at least the first and the second sub-portion and a secondary volumetric energy density to the second sub-portion to be applied; wherein the primary volumetric energy density equals the first volumetric energy density and the sum of the primary volumetric energy density and the secondary volumetric energy density equals the second volumetric energy density.

13. The 3D-printed product according to any one of claims 1 to 8, or the method according to any one of claims 9 to 12, wherein the alloy is an iron-based alloy comprising carbon and at least two or more of chromium, tungsten, molybdenum, cobalt and vanadium, and unavoidable trace amount of impurities, or wherein the alloy is iron based and comprises chromium, vanadium, molybdenum and optionally tungsten and/or cobalt, and unavoidable trace amount of impurities.

14. The 3D-printed product according to any one of claims 1 to 8 and 13, or the method according to any one of claims 9 to 13, wherein the alloy is based on iron and comprises

carbon: equal to or greater than 1.0 and equal to or less than 5.0 weight%;
wherein the alloy further comprises at least two, preferably at least three, of chromium, tungsten, vanadium, molybdenum and cobalt in a content of:

chromium: equal to or greater than 3 and equal to or less than 25weight%,
tungsten: equal to or greater than 2 and equal to or less than 15 weight%,
molybdenum: equal to or greater than 1 and equal to or less than 10 weight%,
vanadium: equal to or greater than 3 and equal to or less than 10 weight%, cobalt: equal to or greater than 8 and equal to or less than 20 weight%; and
unavoidable trace amount of impurities.

15. The 3D-printed product according to any one of claims 1 to 8 and 13 and 14, or the method according to any one of claims 9 to 14, wherein the alloy comprises:

carbon: equal to or greater than 3.1 and equal to or less than 5.1 weight%,
tungsten: equal to or greater than 18 and equal to or less than 30 weight%,
chromium: equal to or greater than 15 and equal to or less than 24 weight%; and
cobalt: balance;
wherein the sum of the chromium and tungsten preferably is 36 to 48wt%.

FIG. 1

10                                    12

14

16

18

FIG. 2

FIG. 3

10

Building
direction

18

16

14

FIG. 4

a)

| 200 |
| 210 |
| 215 |
| 220 |
| 225 |
| 230 |
| 235 |
| 240 |

b)

| 200 |
| 210 |
| 215 |
| 220 |
| 220a |
| 220b |
| 225 |
| 230 |
| 235 |
| 240 |

FIG. 5

a) b) c)

d) e)

FIG. 6

FIG. 7

FIG. 8

| | Sample 3 – V290 | | Sample 4 – V290 | | Sample 6 – V290 | |
|---|---|---|---|---|---|---|
| Cube name | 3L | 3H | 4L | 4H | 6L | 6H |
| Printing order | First | Second | First | Second | First | Second |
| Printing orientation | | | | | | |
| Line energy [J/mm²] | A: 0.45 | B: 9.84 | A: 1.52 | A+B: 9.84+1.52=11.36<br>B: 9.84 | A: 0.45<br>A+B: 0.45+9.84=10.29 | A+B: 0.45 + 9.84=10.29<br>B: 9.84 |
| VED [J/mm³] | A: 14.1 | B: 307.5 | A: 47.5 | A+B: 355<br>B: 307.5 | A: 14.1 | A+B: 321.6<br>B: 307.5 |
| Average carbide size (all carbides) [μm²] | A: 0.75 | B: 2.6 | A: 0.61 | A+B: 1.54 | A: 0.46 | A+B: 1.15 |
| Average carbide size (grey and light grey types separated) [μm²] | N/A | N/A | A: Grey: 0.63<br>A: Light grey: 0.56 | A+B: Grey: 2.08<br>A+B: Light grey: 0.87 | A: Grey: 0.47<br>A: Light grey: 0.43 | A+B: Grey: 1.36<br>A+B: Light grey: 0.93 |
| SD average carbide size [μm²] | 0.64<br>(all carbides) | 4.9<br>(all carbides) | A: Grey: 0.66<br>A: Light grey: 0.48 | A+B: Grey: 5.31<br>A+B: Light grey: 0.98 | A: Grey: 0.45<br>A: Light grey: 0.43 | A+B: Grey: 2.61<br>A+B: Light grey: 0.72 |
| Max carbide size [μm²] | 5.45<br>(all carbides) | 47.9<br>(all carbides) | A: Grey: 4.88<br>A: Light grey: 2.47 | A+B: Grey: 45.5<br>A+B: Light grey: 5.93 | A: Grey: 4.50<br>A: Light grey: 3.08 | A+B: Grey: 28.75<br>A+B: Light grey: 3.95 |

FIG. 9

| | Sample 7 – V290 | | Sample 8 – V290 | | Sample 9 – V290 | |
|---|---|---|---|---|---|---|
| Cube name | 7H | 7L | 8H | 8L | 9L | 9H |
| Printing order | First | Second | First | Second | First | Second |
| Printing orientation | | | | | | |
| Line energy [J/mm²] | A: 9.84 | B: 1.52 | A: 1.52 | B: 0.45 | A: 0.45 | B: 9.84 |
| VED [J/mm³] | A: 307.5 | B: 47.5 | A: 47.5 | B: 14.1 | A: 14.1 | B: 307.5 |
| Average carbide size (all carbides) [μm²] | A: 1.80 | B: 1.04 | A: 0.67 | B: 0.60 | 0.73 | 1.81 |
| Average carbide size (grey and light grey types separated) [μm²] | N/A | N/A | A: Grey: 0.71 A: Light grey: 0.46 | B: Grey: 0.72 B: Light grey: 0.60 | N/A | N/A |
| SD average carbide size [μm²] | A: 2.80 | B: 1.12 | A: Grey: 0.65 A: Light grey: 0.47 | B: Grey: 0.69 B: Light grey: 0.50 | 0.67 | 6.27 |
| Max carbide size [μm²] | A: 17.10 (all carbides) | B: 10.80 (all carbides) | A: Grey: 4.83 A: Light grey: 3.00 | B: Grey: 4.18 B: Light grey: 2.67 | 6.92 (all carbides) | 42.2 (all carbides) |

FIG. 10

| | Sample 3- V150 | |
|---|---|---|
| Cube name | 3L | 3H |
| Printing order | First | Second |
| Line Energy, LE | 0.45 | 9.84 |
| VED [J/mm$^3$] | 14.1 | 307.5 |
| Average carbide size [μm$^2$] | 0.098 | 0.458 |
| SD average carbide size [μm$^2$] | 0.12 | 0.767 |
| Max carbide size [μm$^2$] | 1.051 | 5.589 |
| Printing orientation | A B Printing direction | |

FIG. 11

| | Sample 2 – V480 | | Sample 3 – V480 | |
|---|---|---|---|---|
| Cube name | 2L | 2H | 3L | 3H |
| Printing order | First | Second | First | Second |
| Printing orientation | A → A+B (Printing direction) | | A → A+B (Printing direction) | |
| Line energy [J/mm²] | A: 0.3 | A+B: 0.3+0.8=1.1 | A: 0.8 | A+B: 0.8+0.3=1.1 |
| VED [J/mm³] | A: 34 | A+B: 34+90=124 | A: 90 | A+B: 90+17=107 |
| Average carbide size (all carbides) [µm²] | A: 0.60 | A+B: 3.68 | A: 4.95 | A+B: 7.36 |
| Average carbide size (light grey and dark grey types separated) [µm²] | A: light grey W-type: 0.37 / A: dark grey Cr-type: 0.94 | A+B: light grey W-type: 3.24 / A+B: dark grey Cr-type: 4.15 | A: light grey W-type: 3.56 / A: dark grey Cr-type: 6.33 | A+B: light grey W-type: 6.10 / A+B: dark grey Cr-type: 8.82 |
| SD average carbide size [µm²] | A: light grey W-type: 0.55 / A: dark grey Cr-type: 2.10 | A+B: light grey W-type: 10.72 / A+B: dark grey Cr-type: 7.94 | A: light grey W-type: 10.58 / A: dark grey Cr-type: 19.06 | A+B: light grey W-type: 31.04 / A+B: dark grey Cr-type: 22.17 |
| Max carbide size [µm²] | A: light grey W-type: 4.54 / A: dark grey Cr-type: 15.74 | A+B: light grey W-type: 56.82 / A+B: dark grey Cr-type: 42.63 | A: light grey W-type: 98.40 / A: dark grey Cr-type: 178.72 | A+B: light grey W-type: 279.36 / A+B: dark grey Cr-type: 159.39 |

FIG. 12

FIG. 13

FIG. 14

FIG. 15

a)

Load    Steel ball    Slurry

← Test sample

b)

| Alloy | Used VED (J/mm³) | Wear volume (μm³) |
|-------|------------------|-------------------|
| V150 | 47.6 | 15800 |
| V150 | 307.4 | 14300 |
| V280 | 35.8 | 12500 |
| V280 | 307.4 | 11300 |
| V290 | 35.8 | 6300 |
| V290 | 307.4 | 800 |

FIG. 16

FIG. 17A

FIG. 17B

FIG. 17C

FIG. 17D

Europäisches
Patentamt

European
Patent Office

Office européen
des brevets

# EUROPEAN SEARCH REPORT

Application Number

EP 23 15 6366

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2019 209674 A1 (MTU AERO ENGINES AG [DE]) 7 January 2021 (2021-01-07) | 1-11 | INV.<br>B22F10/28 |
| Y | * paragraphs [0006], [0008], [0012] – [0014], [0016], [0022], [0024] – [0029]; claims; figures * | 12-15 | B22F10/366<br>B22F10/38<br>B33Y70/00<br>C22C1/04 |
| X | DE 10 2018 206147 A1 (FORD GLOBAL TECH LLC [US]) 24 October 2019 (2019-10-24) | 1-8 | C22C19/00<br>C22C33/02 |
| Y | * paragraphs [0014] – [0015], [0017], [0020] – [0029], [0036] – [0043]; claims; figures * | 12 | C22C38/12<br>B33Y10/00<br>B33Y80/00 |
| X | DE 10 2018 217060 A1 (CONTINENTAL AUTOMOTIVE GMBH [DE]) 9 April 2020 (2020-04-09)<br>* paragraphs [0004] – [0006], [0009] – [0015], [0022] – [0030]; claims; figures * | 1-7 | |
| X | EP 4 070 897 A1 (UNIV RUHR BOCHUM [DE]; UNIV SIEGEN [DE]) 12 October 2022 (2022-10-12)<br>* paragraphs [0012] – [0014], [0016] – [0022], [0028]; claims; figures * | 1-8 | TECHNICAL FIELDS SEARCHED (IPC)<br><br>B22F<br>C22C<br>B33Y |
| A | GB 2 559 950 A (ZHIJIAN SHEN [SE]; YUAN ZHONG [SE] ET AL.) 29 August 2018 (2018-08-29)<br>* the whole document * | 1-15 | |
| Y,D | WO 2020/149787 A1 (VBN COMPONENTS AB [SE]) 23 July 2020 (2020-07-23) | 13,14 | |
| A | * page 2, line 29 – page 4, line 4; claims; figures; examples; table 1 *<br>* page 7, line 9 – page 8, line 24 *<br>* page 9, lines 7-30 * | 1-12,15 | |

-/--

The present search report has been drawn up for all claims

| Place of search | Date of completion of the search | Examiner |
|---|---|---|
| The Hague | 25 July 2023 | Ceulemans, Judy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt

European Patent Office

Office européen des brevets

# EUROPEAN SEARCH REPORT

Application Number

EP 23 15 6366

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | WO 2018/169477 A1 (VBN COMPONENTS AB [SE]) 20 September 2018 (2018-09-20) * paragraphs [0038] – [0046], [0048] – [0053]; claims; example 2 * | 15 | |

TECHNICAL FIELDS SEARCHED (IPC)

The present search report has been drawn up for all claims

| Place of search | Date of completion of the search | Examiner |
|---|---|---|
| The Hague | 25 July 2023 | Ceulemans, Judy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 6366

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2023

| Patent document cited in search report | Publication date | Patent family member(s) | Publication date |
|---|---|---|---|
| DE 102019209674 A1 | 07-01-2021 | DE 102019209674 A1 | 07-01-2021 |
| | | WO 2021000981 A1 | 07-01-2021 |
| DE 102018206147 A1 | 24-10-2019 | CN 110385433 A | 29-10-2019 |
| | | DE 102018206147 A1 | 24-10-2019 |
| DE 102018217060 A1 | 09-04-2020 | NONE | |
| EP 4070897 A1 | 12-10-2022 | DE 102021105652 A1 | 15-09-2022 |
| | | EP 4070897 A1 | 12-10-2022 |
| GB 2559950 A | 29-08-2018 | NONE | |
| WO 2020149787 A1 | 23-07-2020 | AU 2020208099 A1 | 24-06-2021 |
| | | BR 112021011872 A2 | 08-09-2021 |
| | | CA 3122999 A1 | 23-07-2020 |
| | | CN 113260473 A | 13-08-2021 |
| | | EP 3911462 A1 | 24-11-2021 |
| | | JP 2022518448 A | 15-03-2022 |
| | | KR 20210117297 A | 28-09-2021 |
| | | US 2022105568 A1 | 07-04-2022 |
| | | WO 2020149787 A1 | 23-07-2020 |
| WO 2018169477 A1 | 20-09-2018 | CA 3056588 A1 | 20-09-2018 |
| | | CN 110418688 A | 05-11-2019 |
| | | EP 3609640 A1 | 19-02-2020 |
| | | JP 7116495 B2 | 10-08-2022 |
| | | JP 2020514560 A | 21-05-2020 |
| | | KR 20190127823 A | 13-11-2019 |
| | | US 2020087755 A1 | 19-03-2020 |
| | | US 2023101301 A1 | 30-03-2023 |
| | | WO 2018169477 A1 | 20-09-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018169477 A

- WO 2020149787 A